# EUROPEAN PATENT APPLICATION

(11) **EP 1 975 194 A2**
(43) Date of publication of application: **01.10.2008**
(21) Application number: 08004034.8
(22) Date of filing: 04.03.2008
(51) Int. Cl.: C08J 7/04, C09D 5/00, C09D 5/16, C09D 7/12

(54) **Hydrophilic member and undercoating composition**

(30) Priority: 28.03.2007 JP 2007084982
(71) Applicant: FUJIFILM Corporation, Minato-ku Tokyo (JP)
(72) Inventor: Hoshi, Satoshi, Ashigarakami-gun Kanagawa (JP); Fukuda, Makoto, Ashigarakami-gun Kanagawa (JP)
(74) Representative: HOFFMANN EITLE

(57) **Abstract**

A hydrophilic member includes: a substrate; a first layer and a hydrophilic layer in this order, wherein the first layer contains a polymer and is joined with the substrate and the hydrophilic layer by a chemical bond; and the hydrophilic layer contains a hydrophilic polymer and a metal element selected from Si, Ti, Zr and Al and has a crosslinking structure.

## Description

### FIELD OF THE INVENTION

The present invention relates to a hydrophilic member and an undercoating composition. In detail, the invention relates to a hydrophilic member with excellent anti-fogging properties, antifouling properties and durability.

### BACKGROUND OF THE INVENTION

Products and members having a resin film surface are used in a wide field and used upon being processed and imparted a function depending upon the purpose. However, it is general that such a surface exhibits hydrophobicity or lipophilic properties in view of an original characteristic of the resin. Accordingly, when an oil, etc. as a staining substance adheres to the surface, it cannot be easily removed. Also, when accumulated, there was a possibility that functions and characteristics of a product or member having such a surface are remarkably reduced. Also, with respect to products and members to be exposed under a high-humidity condition or rainfall, there was a problem that when water droplets adhere thereto, in products and member having a transparent function, the light transmittance is hindered by irregular reflection of light. With respect to products and members having an inorganic surface of glass or a metal, etc., it cannot be said that antifouling properties against the adhesion of a staining substance such as an oil are sufficient. Also, anti-fogging properties against the adhesion of water droplets were not sufficient. In particular, in automobile glasses and building glasses, when a hydrophobic staining substance such as municipal soot and dust, combustion products, for example, carbon black contained in an exhaust gas of an automobile, etc. , oils and fats and sealant elution components adheres thereto, in many cases, it was disturbed to secure a view of angle through the glass due to the adhesion of water droplets (reflection in case of a mirror). Therefore, it was eagerly demanded to impart functions such as antifouling properties, anti-fogging properties and quick-drying properties.

From the viewpoint of antifouling properties, assuming that a staining substance is an organic substance such as an oil, for the purpose of preventing staining, it is necessary to reduce a mutual action with the material surface, namely to make the surface hydrophilic or oil repellent. Also, as to anti-fogging properties, it is necessary to impart spread wetting properties for uniformly spreading the adhered water droplets on the surface (namely, hydrophilicity) or to impart water repellency for making it easy to remove the adhered water droplets. Accordingly, the majority of antifouling or ant-fogging materials which are currently studied rely upon achievement of hydrophilicity or water repellency or oil repellency.

According to a surface treatment method for achieving hydrophilization which has hitherto been proposed, for example, etching treatment and plasma treatment, though the surface is highly hydrophilized, its effect is temporary, and the hydrophilized state cannot be maintained over a long period of time. Also, a surface hydrophilic coating film using a hydrophilic graft polymer as one of hydrophilic resins is proposed (see, for example, Article of The Chemical Daily News, dated January 30, 1995). However, though this coating film has hydrophilicity to some extent, it cannot be said that the compatibility with a substrate is sufficient, and high durability is demanded.

As other members having a surface hydrophilic function, one utilizing titanium oxide as a photocatalyst has hitherto been known. This is based on oxidative composition function and hydrophilization function of an organic material due to irradiation with light. For example, in WO 96/29375 (corresponding to US Patent 6,013,372), it is disclosed that when a photocatalyst-containing layer is formed on a surface of a substrate, the surface is highly hydrophilized optical pumping of the photocatalyst; and it is reported that when this technology is applied to various composite materials such as glasses, lenses, mirrors, exterior materials and wet area materials, excellent functions in anti-fogging properties, antifouling properties and the like can be imparted to such a composite material. A member having titanium oxide coated on a surface of glass is used as a self-cleaning material for building windowpanes or automobile window shields. However, in order to reveal the antifouling or anti-fogging function, it is necessary to expose the member to sunlight over a long period of time, and the deterioration of its properties was inevitable due to accumulation of stains with time over a long period of time. Also, it cannot be said that the film strength is sufficient, and an enhancement of the durability was necessary. Also, a self-cleaning film having a titanium oxide layer provided on a plastic substrate is used for automobile side mirrors. However, likewise the above, it does not sufficient film strength, and a hydrophilic material having enhanced anti-abrasion properties was demanded.

On the other hand, silicone compounds or fluorocarbon compounds are mainly used as an antifouling or anti-fogging material based on water repellency or oil repellency. For example, an antifouling material in which a surface of a substrate is coated with a silanol-terminated organic polysiloxane is disclosed in JP-A-4-338901; a material having a polyfluoroalkyl group-containing silane compound is disclosed in JP-B-6-29332; and a combination of an optical thin film composed mainly of silicon dioxide and a copolymer of a perfluoroalkyl acrylate and an alkoxysilane group-containing monomer is disclosed in JP-A-7-16940. However, such an antifouling material using a silicone compound or a fluorocarbon compound is insufficient in antifouling properties, and it is hard to remove a stain such as fingerprints, sebum, sweat and cosmetics. Also, in the surface treatment with a material with low surface energy, such as fluorine or silicon materials, there is a cause for fears that the function is reduced with a lapse of time. For that reason, the development of an antifouling or anti-fogging member with excellent durability was desired.

### SUMMARY OF THE INVENTION

An object of the invention is to provide a hydrophilic member with excellent hydrophilicity, water resistance, anti-abrasion properties, scratch resistance, anti-fogging properties, antifouling properties, visible light transmittance and weather resistance.

The present inventors made extensive and intensive investigations. As a result, it has been found that the foregoing problems can be solved by providing a layer composed of a stack of a first layer and a hydrophilic layer in this order on a substrate of a hydrophilic member, the first layer being capable of being joined with the substrate and the hydrophilic layer due to a chemical bond, leading to accomplishment of the invention.

Specifically, the invention is as follows.
[1] A hydrophilic member comprising a substrate, a first layer and a hydrophilic layer in this order, wherein the first layer contains a polymer and is joined with the substrate and the hydrophilic layer due to a chemical bond; and the hydrophilic layer contains (A) a hydrophilic polymer and (B) a metal element selected among Si, Ti, Zr and Al and has a crosslinking structure. The first layer may be configured of a single layer or the first layer may be configured of multiple layers of two or more layers.
[2] The hydrophilic member as set forth in [1], wherein the substrate side of the first layer is hydrophobic, and the hydrophilic layer side of the first layer is hydrophilic.
[3] The hydrophilic member as set forth in [1] or [2],
   wherein the chemical bond is at least one of a urethane linkage, a urea linkage, an amide linkage, an ester linkage, an ether linkage, a carbon-carbon linkage, an N-C linkage, an S-C linkage and a siloxane linkage.
[4] The hydrophilic member as set forth in any one of [1] to [3], wherein the hydrophilic polymer (A) contains any one of compounds having structures represented by the following formulae (I) and (II). 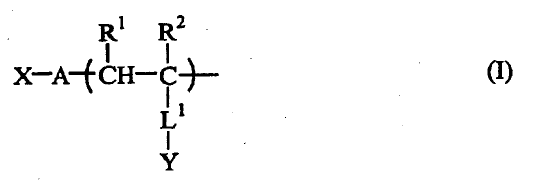 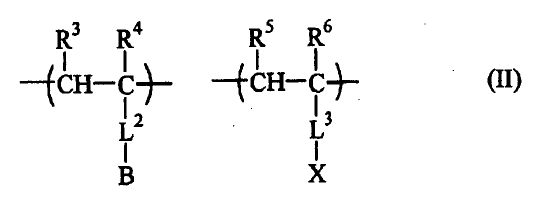 In the formulae (I) and (II), R¹, R², R³, R⁴, R⁵ and R⁶ each independently represents a hydrogen atom or a hydrocarbon group having from 1 to 8 carbon atoms; X represents a reactive group (for example, a carboxyl group or a salt thereof, a carboxylic acid anhydride group, an amino group, a hydroxyl group, an epoxy group, a methylol group, a mercapto group, an isocyanate group, a block isocyanate group, an alkoxysilyl group, an alkoxy titanate group, an alkoxy aluminate group, an alkoxy zirconate group, an ethylenically unsaturated double bond, an ester linkage and a tetrazole group); A, L¹, L² and L³ each independently represents a single bond or a connecting group; Y represents -NHCOR⁷, -CONH₂, -CON(R⁷)₂, -COR⁷, -OH, -CO₂M, -SO₃M, -PO₃M, -OPO₃M or -N(R⁷)₃Z¹; R⁷ represents an alkyl group, an aryl group or an aralkyl group each having from 1 to 18 carbon atoms; M represents a hydrogen atom, an alkali metal, an alkaline earth metal or an onium; Z¹ represents a halogen ion; and B represents the following formula (III). 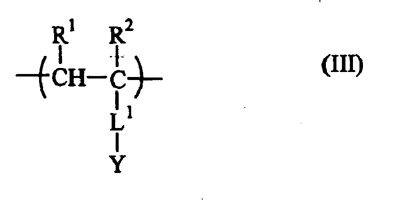 In the formula (III), R¹, R², L¹ and Y are the same as those in the formulae (I) and (II).
[5] The hydrophilic member as set forth in any one of [1] to [3], wherein the hydrophilic polymer (A) contains any one of compounds having structures represented by the following formulae (IV-a) and (IV-b). 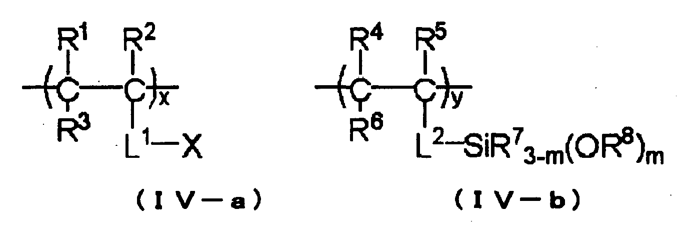 In the formulae (IV-a) and (IV-b), R¹ to R⁸ each independently represents a hydrogen atom or a hydrocarbon group having not more than 8 carbon atoms; L¹ represents a single bond or a polyvalent organic connecting group; L² represents a single bond or a polyvalent organic connecting group having at least one structure selected from the group consisting of -CONH-, -NHCONH-, -OCONH-, -SO₂NH- and -SO₃-; m represents an integer of from 1 to 3; x and y each represents a number of from 100 to 0 and is satisfied with the relationship of (x + y) = 100; X represents -OH, -ORₐ, -CORₐ, -CO₂Rₑ, -CON(Rₐ)(R_{b}), -N(Rₐ)(R_{b}), -NHCOR_{d}, -NHCO₂Rₐ, -OCON(Rₐ)(R_{b}), -NHCON(Rₐ) (R_{b}), -SO₃Rₑ, -OSO₃Rₑ, -SO₂R_{d}, -NHSO₂R_{d}, -SO₂N(Rₐ) (R_{b}), -N(Rₐ) (R_{b}) (R_{c}), -N(Rₐ) (R_{b})(R_{c}) (R_{g}), -PO₃(Rₑ) (R_{f}), -OPO₃(Rₑ) (R_{f}) or -PO₃(R_{d})(Rₑ), wherein Rₐ, R_{b} and R_{c} each independently represents a hydrogen atom or a linear, branched or cyclic alkyl group having from 1 to 8 carbon atoms; R_{d} represents a linear, branched or cyclic alkyl group having from 1 to 8 carbon atoms; Rₑ and R_{f} each independently represents a hydrogen atom, a linear, branched or cyclic alkyl group having from 1 to 8 carbon atoms, an alkali metal, an alkaline earth metal or an onium; and Rg represents a linear, branched or cyclic alkyl group having from 1 to 8 carbon atoms, a halogen atom, an inorganic anion or an organic anion.
[6] A composition for forming a first layer of a hydrophilic member including a substrate, a first layer and a hydrophilic layer in this order, wherein the first layer contains a polymer and is joined with the substrate and the hydrophilic layer due to a chemical bond.

According to the invention, it is possible to provide a hydrophilic member with excellent hydrophilicity, light fastness, durability, anti-fogging properties and quick-drying properties, which is provided with an ultraviolet ray absorber-containing layer and a hydrophilic layer with excellent anti-fogging properties, antifouling properties and quick-drying properties of water, etc. on a surface of a base material of every kind.

### DETAILED DESCRIPTION OF THE INVENTION

The invention is hereunder described in detail.

The hydrophilic member of the invention is a hydrophilic member comprising a substrate having thereon a layer composed of a stack of a first layer and a hydrophilic layer in this order, wherein the first layer contains a polymer and is joined with the substrate and the hydrophilic layer due to a chemical bond; and the hydrophilic layer contains (A) a hydrophilic polymer and (B) a metal element selected among Si, Ti, Zr and Al and has a crosslinking structure.

### [First layer]

In the hydrophilic member of the invention, the first layer contains a polymer, is positioned between a substrate and a hydrophilic layer and reveals firm adhesion upon being joined with the respective layers due to a chemical bond. For that reason, it is preferable that the first layer is used as an undercoat layer.

The first layer can be formed by coating a composition containing a polymer and optionally a crosslinking agent on a substrate and heating and drying the composition. The heating temperature and heating time for forming the first layer are not particularly limited so far as the solvent in the composition can be removed and a firm film can be formed. In view of manufacture aptitude and the like, the heating temperature is preferably not higher than 200 °C, and the heating time is preferably within 24 hours.

### (Composition for forming a first layer)

The first layer can be efficiently formed by preferably using a composition for forming a first layer according to the invention.

The composition for forming a first layer according to the invention is a composition for forming a first layer of the hydrophilic member having a layer composed of a stack of a first layer and a hydrophilic layer in this order on a substrate, contains a polymer and is joined with the substrate and the hydrophilic layer due to a chemical bond.

In the invention, examples of the polymer which can be used in the first layer include polyesters, polyurethanes, polyureas, polyimides, polysiloxanes, polycarbonates, phenoxy resins, epoxy resins, novolak resins, resol resins, condensed resins of a phenol compound and acetone, polyvinyl acetate, acrylic resins and copolymers thereof, polyvinyl phenol, polyvinyl halogenated phenols, methacrylic resins and copolymers thereof, acrylamide copolymers, methacrylamide copolymers, polyvinyl formal, polyamides, polyvinyl butyral, polystyrene, cellulose ester resin, polyvinyl chloride and polyvinylidene chloride. Of these, polymers having a functional group (for example, a carboxyl group or a salt thereof, a carboxylic acid anhydride group, a sulfonic group or a salt thereof, an amino group, an amide group, a hydroxyl group, an epoxy group, a methylol group, a mercapto group, a cyano group, a (block) isocyanate group, a silanol group (silane coupling group), a carbon-carbon double bond group, an ester linkage, a tetrazole group and an aldehyde group) or a radical polymerizable group (for example, an acrylate group, a methacrylate group and a styryl group) are desirable because they are excellent in layer-to-layer adhesiveness and are easily curable with a crosslinking agent as the case may be. Besides, acrylonitrile copolymers, polyurethanes and copolymers having a sulfonamide group in a side chain thereof are preferable. The polymer may contain two or more kinds of the foregoing functional groups.

Favorable examples of the high-molecular weight compound include copolymers having a monomer selected among the following (1) to (13) as a constitutional unit thereof and having a weight average molecular weight of from 1,000 to 1,000,000.
(1) Aromatic hydroxyl group-containing acrylamides, methacrylamides, acrylic esters, methacrylic esters and hydroxystyrenes, novolak resins and resol resins, for example, addition condensates of N-(4-hydroxyphenyl)acrylamide or N-(4-hydroxyphenyl)methacrylamide, o-, m- or p-hydroxystyrene, o-, m- or p-hydroxyphenyl acrylate or methacrylate, phenol, cresol (including m-cresol, p-cresol and m/p mixed cresol), phenol/cresol (including m-cresol, p-cresol and m/p mixed cresol), phenol-modified xylene, tert-butylphenol, octylphenol, resorcinol, pyrogallol, catechol, chlorophenol (including m-Cl and p-Cl), bromophenol (including m-Br and p-Br), salicylic acid, phloroglucinol or the like with an aldehyde (for example, formaldehyde and paraformaldehyde);
(2) Aliphatic hydroxyl group-containing acrylic esters and methacrylic esters, for example, 2-hydroxyethyl acrylate and 2-hydroxyethyl methacrylate;
(3) Acrylic esters, for example, methyl acrylate, ethyl acrylate, propyl acrylate, butyl acrylate, amyl acrylate, hexyl acrylate, cyclohexyl acrylate, octyl acrylate, phenyl acrylate, benzyl acrylate, 2-chloroethyl acrylate, 4-hydroxybutyl acrylate, glycidyl acrylate and N,N-dimethylaminoethyl acrylate;
(4) Methacrylic esters, for example, methyl methacrylate, ethyl methacrylate, propyl methacrylate, butyl methacrylate, amyl methacrylate, hexyl methacrylate, cyclohexyl methacrylate, octyl methacrylate, phenyl methacrylate, benzyl methacrylate, 2-chloroethyl methacrylate, 4-hydroxybutyl methacrylate, glycidyl methacrylate and N,N-dimethylaminoethyl methacrylate;
(5) Acrylamides or methacrylamides, for example, acrylamide, methacrylamide, N-methylol acrylamide, N-methylol methacrylamide, N-ethyl acrylamide, N-ethyl methacrylamide, N-hexyl acrylamide, N-hexyl methacrylamide, N-cyclohexyl acrylamide, N-cyclohexyl methacrylamide, N-hydroxyethyl acrylamide, N-hydroxyethyl methacrylamide, N-phenyl acrylamide, N-phenyl methacrylamide, N-benzyl acrylamide, N-benzyl methacrylamide, N-nitrophenyl acrylamide, N-nitrophenyl methacrylamide, N-ethyl-N-phenyl acrylamide and N-ethyl-N-phenyl methacrylamide;
(6) Vinyl ethers, for example, ethyl vinyl ether, 2-chloroethyl vinyl ether, hydroxyethyl vinyl ether, propyl vinyl ether, butyl vinyl ether, octyl vinyl ether and phenyl vinyl ether;
(7) Vinyl esters, for example, vinyl acetate, vinyl chloroacetate, vinyl butyrate and vinyl benzoate;
(8) Styrenes, for example, styrene, methylstyrene, chloromethylstyrene and styrenesulfonic acid;
(9) Vinyl ketones, for example, methyl vinyl ketone, ethyl vinyl ketone, propyl vinyl ketone and phenyl vinyl ketone;
(10) Sulfonic acids, for example, vinylsulfonic acid and 2-acrylamido-2-methylpropanesulfonic acid;
(11) N-Vinylpyrrolidone, N-vinylcarbazole, 4-vinylpyridine, acrylonitrile, methacrylonitrile, etc.;
(12) N-(o-Aminosulfonylphenyl)acrylamide, N-(m-amino-sulfonylphenyl)acrylamide, N-(p-aminosulfonyl)acrylamide, N-[1-(3-aminosulfonyl)naphthyl]acrylamide, etc.; and
(13) Amino group-containing monomers, for example, dimethylaminoethyl methacrylate, allylamine and ethylene-imine.

As the epoxy resin, any compound is useful so far as it has an epoxy group and has crosslinking properties. Examples thereof include divalent glycidyl group-containing low-molecular weight compounds, for example, bisphenol A diglycidyl ether, ethylene glycol diglycidyl ether, butanediol diglycidyl ether, hexanediol diglycidyl ether, dihydroxybiphenyl diglycidyl ether, diglycidyl phthalate and N,N-diglycidyl aniline; similarly, trivalent glycidyl group-containing low-molecular weight compounds, for example, trimethylolpropane triglycidyl ether, trimethylolphenol triglycidyl ether and Tris P-PA triglycidyl ether; similarly, tetravalent glycidyl group-containing low-molecular weight compounds, for example, pentaerythritol tetraglycidyl ether and tetramethylol bisphenol A tetraglycidyl ether; similarly, polyvalent glycidyl group-containing low-molecular weight compounds, for example, dipentaerythritol pentaglycidyl ether and dipentaerythritol hexaglycidyl ether; and glycidyl group-containing high-molecular weight compounds, for example, polyglycidyl (meth)acrylate and a 1,2-epoxy-4-(2-oxiranyl)cyclohexane adduct of 2,2-bis-(hydroxymethyl)-1-butanol.

Also, examples of commercially available products include an alicyclic epoxy compound "CEL-2021", an alicyclic solid epoxy resin "EHPE-3150", an epoxylated polybutadiene "PB3600", a flexible alicyclic epoxy compound "CEL-2081" and a lactone-modified epoxy resin "PCL-G" (all of which are manufactured by Daicel Chemical Industries, Ltd.). Besides, there are exemplified "CELLOXIDE 2000", "EPOLEAD GT-3000" and "EPOLEAD GT-4000" (all of which are manufactured by Daicel Chemical Industries, Ltd.).

Preferred examples of the hydrophilic polymer include polymers having a hydrophilic group, for example, a hydroxyl group, a carboxyl group, a carboxylate group, a hydroxyethyl group, a polyoxyethyl group, a hydroxypropyl group, a polyoxypropyl group, an amino group, an aminoethyl group, an aminopropyl group, an ammonium group, an amide group, a carboxymethyl group, a sulfonic group and a phosphoric group. Examples of hydrophilic group-containing ethylenically unsaturated monomers include (meth)acrylic acid and salts thereof, itaconic acid and salts thereof, maleic acid and salts thereof, 2-hydroxyethyl (meth)acrylate, hydroxypropyl (meth)acrylate, hydroxybutyl (meth)acrylate, (meth)-acrylamide, N-monomethylol (meth)acrylamide, N,N-dimethylol (meth)acrylamide, 3-vinylpropionic acid and salts thereof, vinylsulfonic acid and salts thereof, 2-sulfoethyl (meth)acrylate and salts thereof, polyoxyethylene glycol mono(meth)acrylate, 2-acrylamido-2-methylpropanesulfonic acid and salts thereof, phosphoxypolyoxyethylene glycol mono(meth)acrylate and salts thereof, allylamine and hydroxypropylene. Also, polyvinyl alcohol, polyvinyl formal, polyvinyl butyral and polyvinylpyrrolidone are included in the polymer of a hydrophilic group-containing ethylenically unsaturated monomer. A degree of saponification of polyvinyl alcohol is preferably 60 % by mass or more, and more preferably 80 % by mass or more.

Vinyl acetate-maleic acid copolymers, styrene-maleic acid copolymers, polyacrylic acids and salts thereof, gum arabic, casein, gelatin, starch derivatives, carboxymethyl cellulose and a sodium salt thereof, cellulose acetate and sodium alginate are also preferable.

Examples of a favorable combination for producing a layer-to-layer bond include the following combinations.

A polymer having a carboxyl group or a salt thereof is able to form a chemical bond composed of an ester linkage or an amide linkage by using a polymer having a methylol group, an amino group, an isocyanate group, a block isocyanate group, or an epoxy group.

A polymer having a carboxylic acid anhydride group or an ester group is able to form a chemical bond composed of an amide linkage by using an amino group-containing polymer.

A polymer having a hydroxyl group or a methylol group is able to form a chemical bond composed of an ether linkage, an ester linkage, an amide linkage or a urethane linkage by using a polymer having a carbon-carbon double bond group, a methylol group, an amino group, an isocyanate group, a block isocyanate group, an aldehyde group, a hydroxyl group or an epoxy group.

An amino group-containing polymer is able to form a chemical bond composed of a urea linkage, an ester linkage or an N-C linkage by using a polymer having an isocyanate group, a block isocyanate group, an epoxy group or a methylol group.

A polymer having a silane coupling group such as an alkoxysilyl group is able to form a chemical bond composed of a siloxane linkage together with a polymer having a silanol group or a hydroxyl group.

A carbon-carbon double bond group-containing polymer is able to form a chemical bond composed of an S-C linkage or an N-C linkage by using a polymer having a thiol group or an amino group.

Also, a radical polymerizable group-containing polymer is able to form a chemical bond composed of a C-C linkage through a combination with a radical polymerizable group-containing polymer, too.

In addition to the crosslinking between polymers, a layer-to-layer chemical bond may also be formed via a crosslinking agent.

As the crosslinking agent which can be applied in the invention, known crosslinking agents capable of forming crosslinking by heat can be used. Examples of general crosslinking agents include those described in Crosslinking Agent Handbook, written by Shinzo YAMASHITA and Tosuke KANEKO and published by Taiseisha Ltd. (1981). The crosslinking agent which is used in the invention is not particularly limited so far as it has two or more functional groups and is effectively crosslinkable with the hydrophilic polymer. Specific examples of a thermal crosslinking agent include α,ω-alkane- or alkenedicarboxylic acids (for example, 1,2-ethanedicarboxylic acid and adipic acid) ; polycarboxylic acids (for example, 1,2,3-propanetricarboxylic acid, 1,2,3,4-butanetetracarboxylic acid, trimellitic acid and polyacrylic acid); amine compounds (for example, butylamine, spermine, diaminecyclohexane, piperazine, aniline-phenylenediamine, 1,2-ethanediamine, diethylenediamine, diethylenetriamine and polyethyleneimine); polyepoxy compounds (for example, ethylene or propylene glycol diglycidyl ether, tetraethylene glycol diglycidyl ether, nonaethylene glycol diglycidyl ether, polyethylene or polypropylene glycol glycidyl ether, neopentyl glycol diglycidyl ether, 1,6-hexanediol diglycidyl ether, trimethylolpropane glycidyl ether and sorbitol polyglycidyl ether); aldehyde compounds (for example, glyoxal); oligo-alkylene or polyalkylene glycols (for example, ethylene glycol, propylene glycol, diethylene glycol and tetraethylene glycol); polyhydroxy compounds (for example, trimethylolpropane, glycerin, pentaerythritol, sorbitol and polyvinyl alcohol); polyaldehyde compounds (for example, glyoxal and terephthaldehyde); polyisocyanate compounds (for example, tolylene diisocyanate, hexamethylene diisocyanate, diphenylmethane isocyanate, xylylene diisocyanate, polymethylene polyphenyl isocyanate, cyclohexyl diisocyanate, cyclohexane phenylene diisocyanate, naphthalene-1,5-diisocyanate, isopropylbenzene-2,4-diisocynate and a polypropylene glycol/tolylene diisocyanate addition reaction product); block polyisocyanate compounds; silane coupling agents (for example, tetraalkoxysilanes); metal crosslinking agents (for example, acetyl acetonate of aluminum, copper or iron(III)); polymethylol compounds (for example, trimethylolmelamine and pentaerythritol); and polythiol compounds (for example, dithioerythritol, pentaerythritol tetrakis(2-mercaptoacetate) and trimethylolpropane tris-(2-mercaptoacetate)).

With respect to such a thermal crosslinking agent, an optimal compound can be properly chosen from the viewpoint of compatibility with the polymer to be used.

Also, when the crosslinked hydrophilic layer is cured with a radical, a radical polymerizable compound can be used as a crosslinking component. The "radical polymerizable compound" as referred to herein is an addition polymerizable compound having at least one ethylenically unsaturated double bond. The radical polymerizable compound is selected among compounds having at least one terminal ethylenically unsaturated bond, and preferably two or more terminal ethylenically unsaturated bonds. The group of such compounds is widely known in the subject industrial field, and these compounds can be used in the invention without particular limitations. Such a compound has a chemical morphology, for example, a monomer, a prepolymer, namely a dimer, a trimer and an oligomer, and a mixture or a copolymer thereof.

Examples of monomers and copolymers thereof include unsaturated carboxylic acids (for example, acrylic acid, methacrylic acid, itaconic acid, crotonic acid, isocrotonic acid and maleic acid) and esters and amides thereof. Esters of an unsaturated carboxylic acid and an aliphatic polyhydric alcohol compound and amides of an unsaturated carboxylic acid and an aliphatic polyhydric amine compound are preferably used. Also, addition reaction products of an unsaturated carboxylic acid ester or amide having a nucleic substituent (for example, a hydroxyl group, an amino group and a mercapto group) with a monofunctional or polyfunctional isocyanate or epoxy and dehydration condensation reaction products thereof with a monofunctional or polyfunctional carboxylic acid are favorably useful. Also, addition reaction products of an unsaturated carboxylic acid ester or amide having an electrophilic substituent (for example, an isocyanate group and an epoxy group) with a monofunctional or polyfunctional alcohol, amine or thiol; and displacement reaction products of an unsaturated carboxylic acid ester or amide having a split-off substituent (for example, a halogen group and a tosyloxy group) with a monofunctional or polyfunctional alcohol, amine or thiol are favorable. As other examples, the group of compounds obtained by replacing the foregoing unsaturated carboxylic acid with an unsaturated phosphonic acid, styrene or vinyl ether or the like can be used.

With respect to monomers of an ester of an aliphatic polyhydric alcohol compound and an unsaturated carboxylic acid, specific examples of acrylic esters include ethylene glycol diacrylate, triethylene glycol diacrylate, 1,3-butanediol diacrylate and tetramethylene glycol diacrylate.

Specific examples of methacrylic esters include tetramethylene glycol dimethacrylate, triethylene glycol dimethacrylate, neopentyl glycol dimethacrylate and trimethylolpropane trimethacrylate.

Specific examples of itaconic esters include ethylene glycol diitaconate, propylene glycol diitaconate, 1,3-butanediol diitaconate, 1,4-butanediol diitaconate and tetramethylene glycol diitaconate.

As examples of other esters, for example, aliphatic alcohol based esters described in JP-B-46-27926, JP-B-51-47334 and JP-A-57-196231; esters having an aromatic skeleton described in JP-A-59-5240, JP-A-59-5241 and JP-A-2-226149; amino group-containing esters described in JP-A-1-165613; and the like are favorably useful, too. Furthermore, the foregoing ester monomers can be used as a mixture.

Also, specific examples of monomers of an amide of an aliphatic polyhydric amine compound and an unsaturated carboxylic acid include methylene bis-acrylamide, methylene bis-methacrylamide, 1,6-hexamethylene bis-acrylamide, 1,6-hexamethylene bis-methacrylamide, diethylenetriamine tris-acrylamide, xylylene bis-acrylamide and xylylene bis-methacrylamide. Examples of other preferred amide based monomers include those having a cyclohexylene structure described in JP-B-54-21726.

Other examples include polyfunctional acrylates or methacrylates, for example, polyester acrylates and epoxy acrylates obtained through a reaction of an epoxy resin and (meth)acrylic acid described in JP-A-48-64183, JP-B-49-43191 and JP-B-52-30490. Also, examples include specified unsaturated compounds described in JP-B-46-43946, JP-B-1-40337 and JP-B-1-40336 and vinylsulfonic acid based compounds described in JP-A-2-25493. Also, in some cases, structures containing a perfluoroalkyl group described in JP-A-61-22048 are favorably useful. Furthermore, compounds presented as photocurable monomers and oligomers in Journal of the Adhesion Society of Japan, Vol. 20, No. 7, pages 300 to 308 (1984) can be used.

As the chemical bond which the first layer is able to form relative to the substrate and the hydrophilic layer, a urethane linkage, a urea linkage, an amide linkage, an ester linkage, an ether linkage, a carbon-carbon linkage, an N-C linkage, an S-C linkage and a siloxane linkage are preferable.

What the first layer is joined with the substrate and the hydrophilic layer due to a chemical bond can be confirmed by measuring a cross-section of the member by means of time-of-flight secondary ion mass spectrometry (TOF-SIMS). TOF-SIMS is able to analyze the most superficial layer (from several angstroms to several tens angstroms), has high special resolution (from 0.1 to several µm) and is able to measure the distribution on the surface. Among surface analysis methods, TOF-SIMS has the highest sensitivity and is able to detect molecules or fragments, and therefore, it is able to obtain much information regarding the chemical structure. In order to obtain the cross-section, it is preferable to perform oblique cutting, and even in a thin film in an order of µm, it is possible to cut out the cross-section by an enlargement of about 10 times to 100 times.

What the first layer is joined with the substrate and the hydrophilic layer due to a chemical bond can also be confirmed by means of the measurement of an IR absorption spectrum. As the measurement of an IR absorption spectrum, the Fourier transform infrared spectroscopy (FT-IR) is preferable, and the measurement can be carried out by a transmission method or a reflection method. When the measurement is carried out by a transmission method, it is preferable to use a silicon wafer or the like which is transparent to infrared rays.

It is important that the first layer achieves an adhesion function and also does not reduce the surface hydrophilicity of the hydrophilic layer. For that purpose, it is preferable that the hydrophilic layer side of the first layer is high in hydrophilicity, whereas the substrate side of the first layer is low in hydrophilicity as compared with the hydrophilic layer side. The terms "high in hydrophilicity" mean that a water droplet contact angle of the surface is not more than 90 degrees. The water droplet contact angle of the surface is preferably not more than 80 degrees, and more preferably not more than 70 degrees. It is preferable that the water droplet contact angle of the surface on the substrate side of the first layer is larger than that on the hydrophilic layer side of the first layer.

In order to achieve such a configuration, it would be better that the hydrophilicity/hydrophobicity in the first layer is inclined. Concretely, the first layer can be configured of multiple layers of two or more layers. With respect to necessary requirements for the multilayered configuration, it would be better that a layer closer to the hydrophilic layer has a smaller water droplet contact angle on the surface of that layer. Also, it would be better that a layer of the side closer to the substrate has a larger water droplet contact angle on the surface of that layer. Concretely, a polymer can be selected among the foregoing various polymers and used.

A solvent to be used in preparing the composition for forming the first layer is not particularly limited so far as it is able to uniformly dissolve and disperse the respective components therein. Known solvents, for example, water, hydrocarbons, halogenated hydrocarbons, alcohols, polyhydric alcohols, ethers, ketones, esters, phenols, nitrogen-containing solvents, sulfur-containing solvents and fluorocarbon based solvents can be used without particular limitations.

From the viewpoints of solubility of the polymer and easiness of drying, water, alcohols, methyl ethyl ketone, 2-methoxypropanol, ethyl acetate, acetone, dimethyl sulfoxide and dimethylformamide are preferable. As the alcohol, methanol, ethanol and isopropyl alcohol are preferable. Also, the foregoing solvent can be used singly or in admixture of two or more kinds thereof.

The first layer in the hydrophilic member of the invention can be prepared by a known coating method, and the coating method is not particularly limited. Examples of the coating method which can be applied include a spray coating method, a dip coating method, a flow coating method, a spin coating method, a roll coating method, a film applicator method, a screen printing method, a bar coater method, painting with a brush and painting with a sponge.

In the case where the thus obtained first layer contains a crosslinking agent, when the non-volatile crosslinking agent is contained and present therein without losing its activity, and in particular, the non-volatile crosslinking agent also exists on that surface, in further providing the foregoing hydrophilic layer on the first layer, the adhesion at an interface between the first layer and the hydrophilic layer becomes extremely high.

The thickness of the first layer is preferably from 0.01 to 10 µm, and more preferably from 0. 05 to 5 µm. When the first layer is too thin, sufficient adhesion strength to the hydrophilic layer is not obtained. When the first layer is too thick, coating unevenness is easily generated.

### [Hydrophilic layer]

The "hydrophilic layer" as referred to in the invention means a layer having a surface having a water droplet contact angle of the surface of not more than 40 degrees. The water droplet contact angle of the surface is preferably not more than 30 degrees, and more preferably not more than 20 degrees.

The hydrophilic layer which is used in the invention contains (A) a hydrophilic polymer and (B) a metal element selected among Si, Ti, Zr and Al. It is preferable that the hydrophilic layer further contains (C) a catalyst; and it is more preferable that the hydrophilic layer further contains (D) an additive as the need arises.

The hydrophilic layer which is used in the invention can be formed by coating a hydrophilic composition containing (A) a hydrophilic polymer and (B) a metal element selected among Si, Ti, Zr and Al on a surface of a substrate and heating and drying the composition.

### [(A) Hydrophilic polymer]

The hydrophilic polymer which is used in the invention is a hydrophilic group-containing polymer. Also, it is preferable that the hydrophilic polymer is a polymer having a group capable of generating a linkage with a metal alkoxide compound due to a catalytic action or the like.

The hydrophilic polymer has a crosslinking structure and forms a chemical bond in an end thereof or has a graft polymer structure in which a hydrophilic polymer is bound to the principal chain chemically bonded to a crosslinked structure. Therefore, a hydrophilic layer which is very high in motility of a polymer chain and excellent in hydrophilicity can be provided.

Preferred examples of the hydrophilic group of the hydrophilic polymer include functional groups, for example, a carboxyl group, an alkali metal salt of a carboxyl group, a sulfonic group, an alkali metal salt of a sulfonic group, a hydroxyl group, an amide group, a carbamoyl group, a sulfonamide group and a sulfamoyl group. These groups may be present at any position in the polymer. A polymer structure in which a plural number of such hydrophilic groups are bonded to the polymer principal chain directly or via a connecting group or are bonded in the polymer side chain or graft side chain is preferable. Examples of the group capable of generating a linkage with a metal alkoxide compound due to a catalytic action include reactive groups, for example, a carboxyl group, an alkali metal salt of a carboxyl group, a carboxylic acid anhydride group, an amino group, a hydroxyl group, an epoxy group, a methylol group, a mercapto group, an isocyanate group, a block isocyanate group, an alkoxysilyl group, an alkoxy titanate group, an alkoxy aluminate group, an alkoxy zirconate group, an ethylenically unsaturated group, an ester group and a tetrazole group. Examples of the polymer structure having a hydrophilic group and a group capable of generating a linkage with a metal alkoxide compound due to a catalytic action or the like include cyclic polymer structures of a natural product (for example, cellulose, amylose and chitosan) in addition to polymers resulting from vinyl polymerization of an ethylenically unsaturated group (for example, an acrylate group, a methacrylate group, an itaconic group, a crotonic group, a succinic group, a styrene group, a vinyl group, an allyl group, a vinyl ether group and a vinyl ester group), polycondensed polymers (for example, polyesters, polyamides and polyamic acid) and addition polymerized polymers (for example, polyurethanes). Specific examples include structures represented by the following formulae (I) and (II).

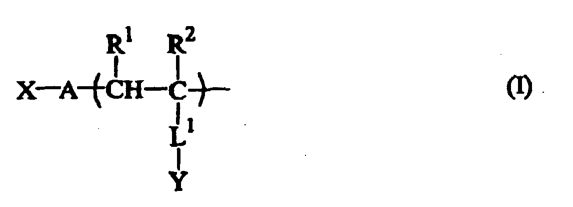

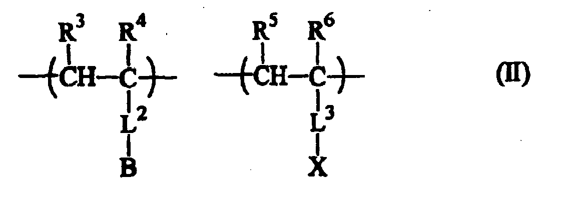

In the formulae (I) and (II), R¹, R², R³, R⁴, R⁵ and R⁶ each independently represents a hydrogen atom or a hydrocarbon group having from 1 to 8 carbon atoms; X represents a reactive group (for example, a carboxyl group or a salt thereof, a carboxylic acid anhydride group, an amino group, a hydroxyl group, an epoxy group, a methylol group, a mercapto group, an isocyanate group, a block isocyanate group, an alkoxysilyl group, an alkoxy titanate group, an alkoxy aluminate group, an alkoxy zirconate group, an ethylenically unsaturated double bond, an ester linkage and a tetrazole group); A, L¹, L² and L³ each independently represents a single bond or a connecting group; Y represents -NHCOR⁷, -CONH₂, -CON(R⁷)₂, -COR⁷ -OH, -CO₂M, -SO₃M, -PO₃M, -OPO₃M or -N(R⁷)₃Z¹; R⁷ represents an alkyl group, an aryl group or an aralkyl group each having from 1 to 18 carbon atoms; M represents a hydrogen atom, an alkali metal, an alkaline earth metal or an onium; Z¹ represents a halogen ion; and B represents the following formula (III).

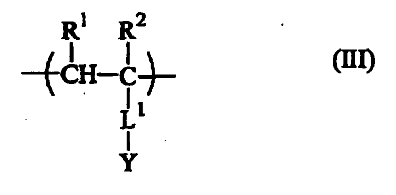

In the formula (III), R¹, R², L¹ and Y are the same as those in the formulae (I) and (II).

Also, in the hydrophilic member of the invention, it is preferable that the hydrophilic polymer (A) is selected among compounds having structures represented by the following formulae (IV-a) and (IV-b).

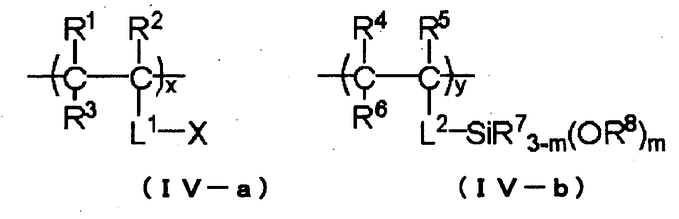

In the formulae (IV-a) and (IV-b), R¹ to R⁸ each independently represents a hydrogen atom or a hydrocarbon group having not more than 8 carbon atoms; L¹ represents a single bond or a polyvalent organic connecting group; L² represents a single bond or a polyvalent organic connecting group having at least one structure selected from the group consisting of -CONH-, -NHCONH-, -OCONH-, -SO₂NH- and -SO₃-; m represents an integer of from 1 to 3; x and y each represents a number of from 100 to 0 and is satisfied with the relationship of (x + y) = 100; X represents -OH, -ORₐ, -CORₐ, -CO₂Rₑ, -CON(Rₐ) (R_{b}), -N(Rₐ)(R_{b}), -NHCOR_{d}, -NHCO₂Rₐ, -OCON(Rₐ)(R_{b}), -NHCON(Rₐ) (R_{b}), -SO₃Rₑ, -OSO₃Rₑ, -SO₂R_{d}, -NHSO₂R_{d}, -SO₂N(Rₐ) (R_{b}), -N (Rₐ) (R_{b}) (R_{c})*,* -N(Rₐ) (R_{b}) (R_{c}) (R_{g}), -PO₃(Rₑ) (R_{f})*,* -OPO₃ (Rₑ) (R_{f}) or -PO₃(R_{d}) (Rₑ), wherein Rₐ, R_{b} and R_{c} each independently represents a hydrogen atom or a linear, branched or cyclic alkyl group having from 1 to 8 carbon atoms; R_{d} represents a linear, branched or cyclic alkyl group having from 1 to 8 carbon atoms; Rₑ and R_{f} each independently represents a hydrogen atom, a linear, branched or cyclic alkyl group having from 1 to 8 carbon atoms, an alkali metal, an alkaline earth metal or an onium; and Rg represents a linear, branched or cyclic alkyl group having from 1 to 8 carbon atoms, a halogen atom, an inorganic anion or an organic anion.

It is preferable that the hydrophilic polymer which is used in the invention has a reactive group and a hydrophilic group. There are the case where a reactive group is present in only one end of the principal chain; and the case where plural reactive groups are present in the principal chain.

The "reactive group" as referred to herein means a functional group capable of reacting with a hydrolysis and polycondensation product of the metal alkoxide compound to form a chemical bond. Also, reactive groups may form a chemical bond each other. The hydrophilic polymer is preferably water-soluble, and it is preferable that the hydrophilic polymer becomes water-insoluble upon reaction with a hydrolysis and polycondensation product of the metal alkoxide compound.

Similar to the usual meanings, the chemical bond includes a covalent bond, an ionic bond, a coordination bond and a hydrogen bond. The chemical bond is preferably a covalent bond.

In general, the reactive group is identical with a reactive group contained in a crosslinking agent of a polymer and is a compound capable of forming crosslinking by heat or light. The crosslinking agent is described in *Crosslinking Agent Handbook,* written by Shinzo YAMASHITA and Tosuke KANEKO and published by Taiseisha Ltd. (1981).

Examples of the reactive group include carboxyl (HOOC-) or a salt thereof (MOOC-, wherein M represents a cation), an anhydrous carboxyl group (for example, monovalent groups derived from succinic anhydride, phthalic anhydride or maleic anhydride), amino (H₂N-), hydroxyl (HO-), an epoxy group (for example, a glycidyl group), methylol (HO-CH₂-), mercapto (HS-), isocyanate (OCN-), a block isocyanate group, an alkoxysilyl group, an alkoxy titanate group, an alkoxy zirconate group, an ethylenically unsaturated double group, an ester group and a tetrazole group. The reactive group is most preferably an alkoxysilyl group. Two or more reactive groups may be present in one end thereof. The two or more reactive groups may be different from each other.

It is preferable that a connecting group is mediated between the repeating unit and the reactive group of the hydrophilic polymer or between the repeating unit and the principal chain of the hydrophilic polymer. It is preferable that the connecting groups A, L¹, L² and L³ are each independently a single bond or selected among -O-, -S-, -CO-, -NH-, -N<, an aliphatic group, an aromatic group, a heterocyclic group and a combination thereof. The connecting group is preferably -O-, -S-, -CO-, -NH- or a combination containing -O-, -S-, -CO- or -NH-.

### (Hydrophilic polymer (I) having a reactive group in one end thereof)

The hydrophilic polymer having a reactive group in one end thereof can be, for example, synthesized by radical polymerizing a hydrophilic monomer (for example, acrylamide, acrylic acid and a potassium salt of 3-sulfopropyl methacrylate) in the presence of a chain transfer agent (described in Kanji KAMACHI and Tsuyoshi ENDO, *Radical Polymerization Handbook,* NTS) or an iniferter (described in Macromolecules, 1986, 19, pages 287) et seq. , Otsu). Examples of the chain transfer agent include 3-mercaptopropionic acid, 2-aminoethanethiol hydrochloride, 3-mercaptopropanol, 2-hydroxyethyl disulfide and 3-mercaptopropyl trimethoxysilane. Also, a hydrophilic monomer (for example, acrylamide) may be radical polymerized by using a radical polymerization initiator having a reactive group (for example, carboxyl) without using a chain transfer agent.

The hydrophilic chain having a reactive group in one end thereof preferably has a mass average molecular weight of not more than 1, 000, 000, more preferably from 1,000 to 1, 000, 000, and most preferably from 2,000 to 100,000.

The high-molecular weight compound represented by the formula (I) is a hydrophilic polymer having a reactive group in an end thereof. In the foregoing formula (I), R¹ and R² each independently represents a hydrogen atom or a hydrocarbon group having not more than 8 carbon atoms. Examples of the hydrocarbon group include an alkyl group and an aryl group; and a linear, branched or cyclic alkyl group having not more than 8 carbon atoms is preferable. Specific examples thereof include a methyl group, an ethyl group, a propyl group, a butyl group, a pentyl group, a hexyl group, a heptyl group, an octyl group, an isopropyl group, an isobutyl group, an s-butyl group, a t-butyl group, an isopentyl group, a neopentyl group, a 1-methylbutyl group, an isohexyl group, a 2-ethylhexyl group, a 2-methylhexyl group and a cyclopentyl group. R¹ and R² are each preferably a hydrogen atom, a methyl group or an ethyl group from the viewpoints of effects and easiness of availability.

Such a hydrocarbon group may further have a substituent. When the alkyl group has a substituent, the substituted alkyl group is constituted by bonding between a substituent and an alkylene group. Here, a monovalent non-metal atomic group exclusive of hydrogen is used as the substituent. Preferred examples of the substituent include a halogen atom (for example, -F, -Br, -Cl and -I), an alkoxy group, an aryloxy group, an alkylthio group, an arylthio group, an N-alkylamino group, an N,N-dialkylamino group, an acyloxy group, an N-alkylcarbamoyloxy group, an N-arylcarbamoyloxy group, an acylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N-alkyl-N-arylcarbamoyl group, a sulfo group, a sulfonate group, a sulfamoyl group, an N-alkylsulfamoyl group, an N,N-dialkylsulfamoyl group, an N-arylsulfamoyl group, an N-alkyl-N-arylsulfamoyl group, a phosphono group, a phosphonate group, a dialkylphosphono group, a diarylphosphono group, a monoalkylphosphono group, an alkylphosphonate group, a monoarylphosphono group, an arylphosphonate group, a phosphonoxy group, a phosphonatoxy group, an aryl group and an alkenyl group.

On the other hand, as the alkylene group in the substituted alkyl group, an alkylene group obtained by eliminating any one of hydrogen atoms on the foregoing alkyl group having from 1 to 20 carbon atoms to convert the resulting alkyl group into a divalent organic residue can be exemplified. Preferred examples thereof include a linear alkylene group having from 1 to 12 carbon atoms, a branched alkylene group having from 3 to 12 carbon atoms and a cyclic alkylene group having from 5 to 10 carbon atoms. Specific examples of the preferred substituted alkyl group obtained by combining these substituent and alkylene group include a chloromethyl group, a bromomethyl group, a 2-chloroethyl group, a trifluoromethyl group, a methoxymethyl group, a methoxyethoxyethyl group, an allyloxymethyl group, a phenoxymethyl group, a methylthiomethyl group, a tolylthiomethyl group, an ethylaminoethyl group, a diethylaminopropyl group, a morpholinopropyl group, an acetyloxymethyl group, a benzoyloxymethyl group, an N-cyclohexylcarbamoyloxyethyl group, an N-phenylcarbamoyloxyethyl group, an acetylaminoethyl group, an N-methylbenzoylaminopropyl group, a 2-oxyethyl group, a 2-oxypropyl group, a carboxypropyl group, a methoxycarbonylethyl group, an allyloxycarbonylbutyl group, a chlorophenoxycarbonylmethyl group, a carbamoylmethyl group, an N-methylcarbamoylethyl group, an N,N-dipropyl-carbamoylmethyl group, an N-(methoxyphenyl)carbamoylethyl group, an N-methyl-N-(sulfophenyl)carbamoylmethyl group, a sulfobutyl group, a sulfonatobutyl group, a sulfamoylbutyl group, an N-ethylsulfamoylmethyl group, an N,N-dipropyl-sulfamoylpropyl group, an N-tolylsulfamoylpropyl group, an N-methyl-N-(phosphonophenyl)sulfamoyloctyl group, a phosphonobutyl group, a phosphonatohexyl group, a diethylphosphonobutyl group, a diphenylphosphonopropyl group, a methylphosphonobutyl group, a methylphosphonatobutyl group, a tolylphosphonohexyl group, a tolylphosphonatohexyl group, a phosphonoxypropyl group, a phosphonatoxybutyl group, a benzyl group, a phenethyl group, an α-methylbenzyl group, a 1-methyl-1-phenylethyl group, a p-methylbenzyl group, a cinnamyl group, an allyl group, a 1-propenylmethyl group, a 2-butenyl group, a 2-methylallyl group, a 2-methyl-propenylmethyl group, a 2-propenyl group, a 2-butynyl group and a 3-butynyl group.

A and L¹ each represents a single bond or an organic connecting group. Here, when A and L¹ each represents an organic connecting group, A and L¹ each represents a polyvalent connecting group composed of a non-metal atom. Specific examples of the connecting group include those composed of from 1 to 60 carbon atoms, from 0 to 10 nitrogen atoms, from 0 to 50 oxygen atoms, from 1 to 100 hydrogen atoms and from 0 to 20 sulfur atoms. More specific examples of the connecting group include the following structural units or those constituted through a combination thereof.

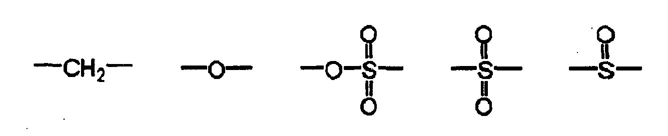

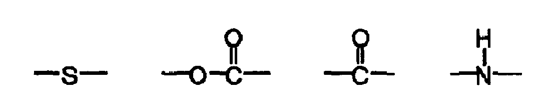

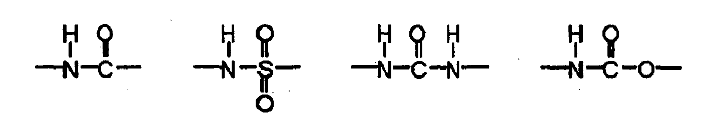

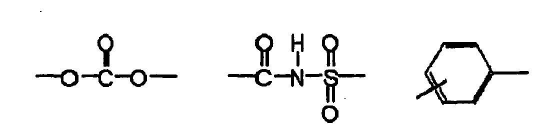

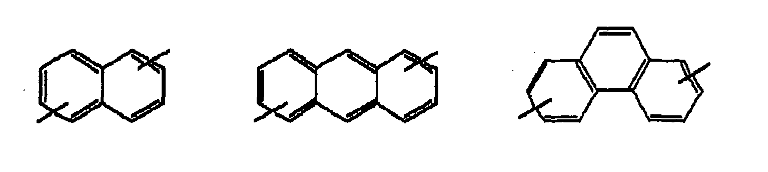

Y represents -NHCOR⁷, -CONH₂, -CON(R⁷)₂, -COR⁷, -OH, -CO₂M, -SO₃M, -PO₃M, -OPO₃M or -N(R⁷)₃Z¹. Here, R⁷ represents a linear, branched or cyclic alkyl group, an aryl group or an aralkyl group each having from 1 to 18 carbon atoms; M represents a hydrogen atom, an alkali metal, an alkaline earth metal or an onium; and Z¹ represents a halogen ion. When plural R⁷s are present as in -CON(R⁷)₂, R⁷s may be taken together to form a ring; and the formed ring may be a hetero ring containing a hetero atom, for example, an oxygen atom, a sulfur atom and a nitrogen atom. R⁷ may further have a substituent. Here, examples of the substituent which can be introduced include those exemplified above as the substituent which can be introduced when R¹ and R² each represents an alkyl group.

Preferred specific examples of R⁷ include a methyl group, an ethyl group, a propyl group, a butyl group, a pentyl group, a hexyl group, a heptyl group, an octyl group, an isopropyl group, an isobutyl group, an s-butyl, a t-butyl group, an isopentyl group, a neopentyl group, a 1-methylbutyl group, an isohexyl group, a 2-ethylhexyl group, a 2-methylhexyl group and a cyclopentyl group. Also, examples of M include a hydrogen atom, an alkali metal (for example, lithium, sodium and potassium), an alkaline earth metal (for example, calcium and barium) and an onium (for example, ammonium, iodonium and sulfonium) . Preferred specific examples of Y include -NHCOCH₃, -CONH₂, -COOH, -SO₃⁻NMe₄⁺ and a morpholino group.

Specific examples (Illustrative Compounds I-1 to I-38) of the hydrophilic polymer represented by the formula (I) which can be favorably used in the invention will be given below, but it should not be construed that the invention is limited thereto.

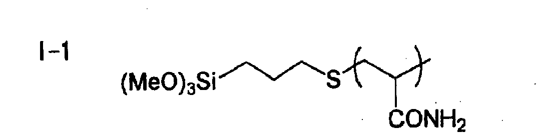

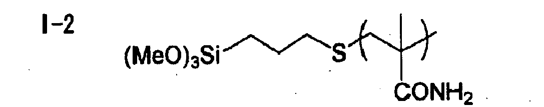

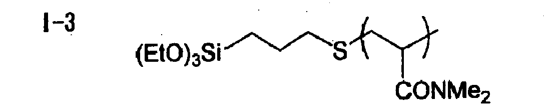

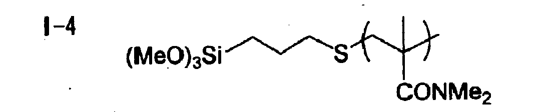

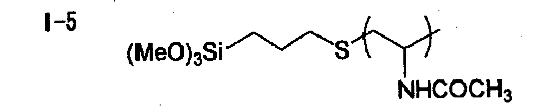

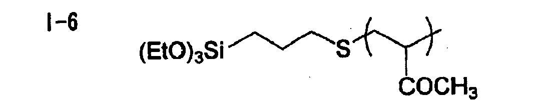

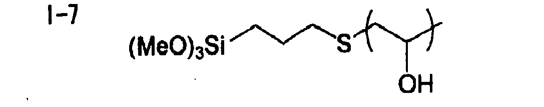

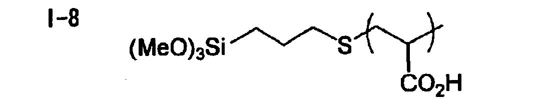

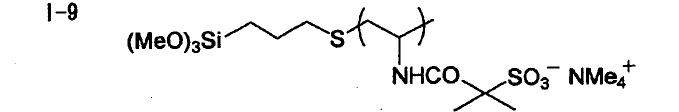

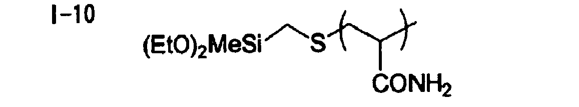

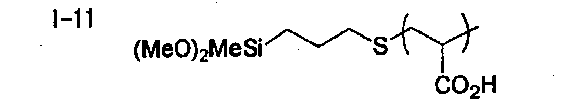

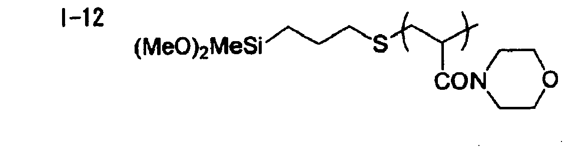

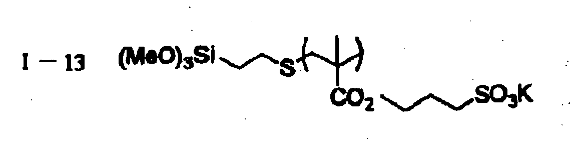

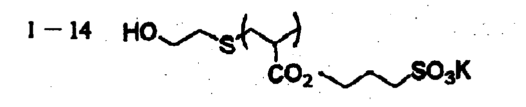

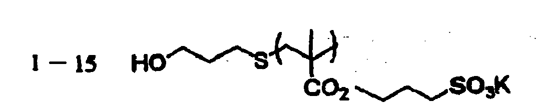

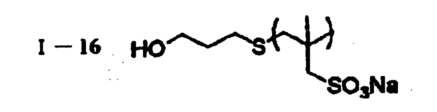

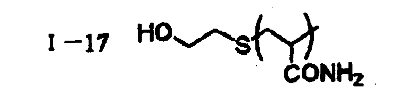

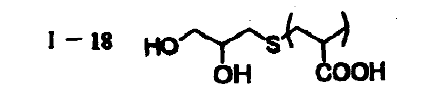

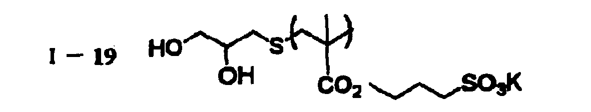

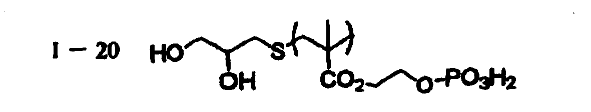

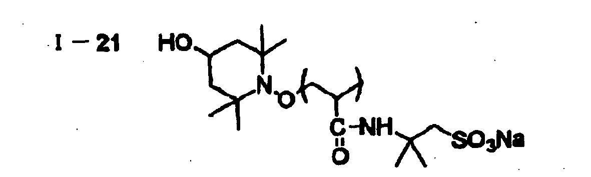

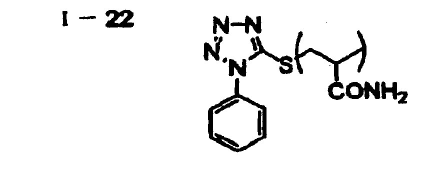

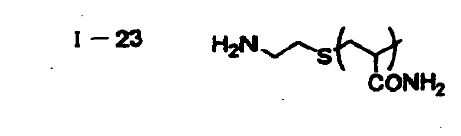

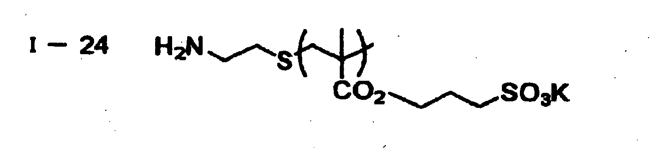

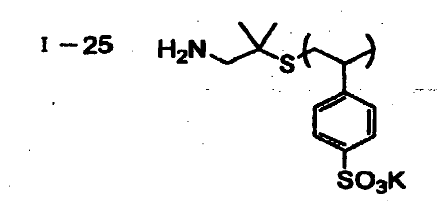

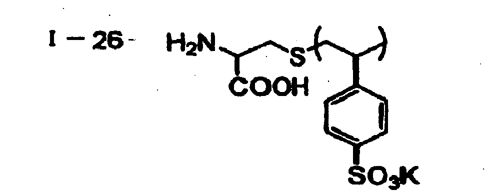

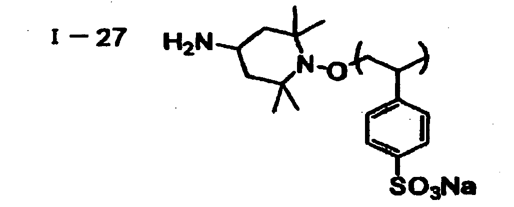

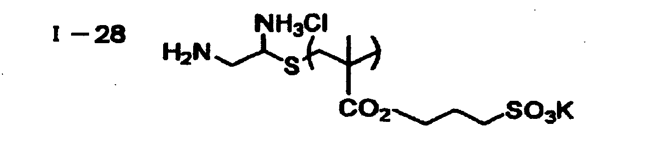

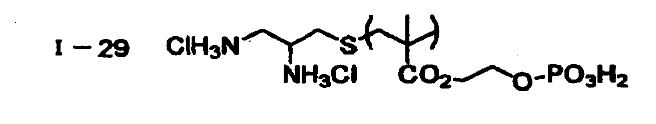

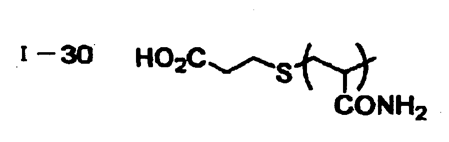

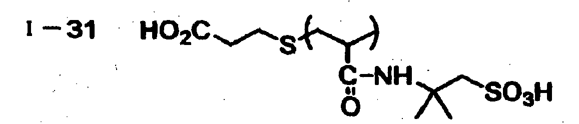

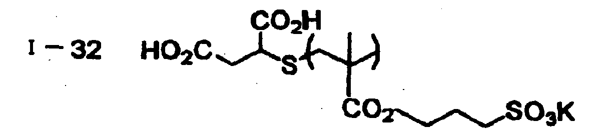

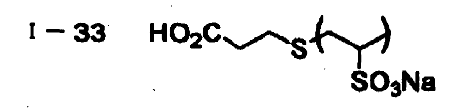

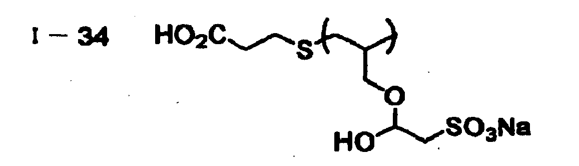

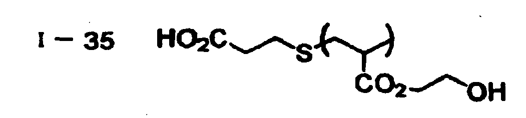

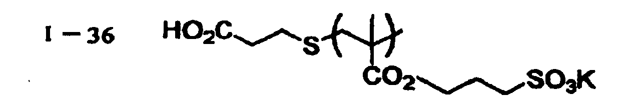

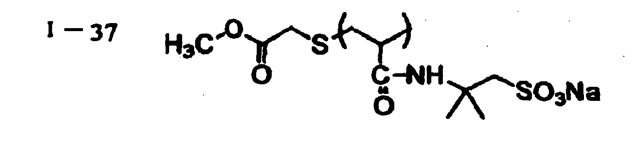

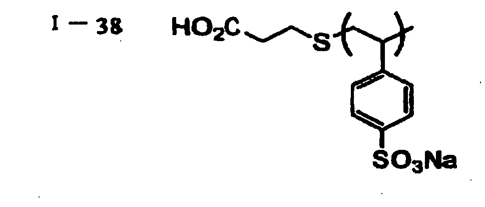

The above-exemplified hydrophilic polymers can be synthesized by radical polymerizing a radical polymerizable monomer represented by the following formula (i) by using a silane coupling agent having chain transfer ability in radical polymerization as represented by the following formula (ii) . Since the silane coupling agent (ii) has chain transfer ability, a polymer in which a silane coupling group is introduced in an end of the polymer principal chain in the radical polymerization can be synthesized.

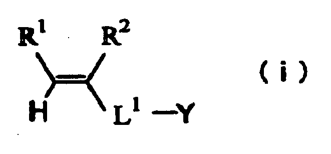

**X-A-SH** **(ii)**

In the foregoing formulae (i) and (ii), A, R¹ to R², L¹ and Y are synonymous with those in the foregoing formula (I). These compounds are commercially available or can be easily synthesized.

### (Hydrophilic polymer (II) having plural reactive groups)

As the hydrophilic polymer having plural reactive groups as represented by the foregoing formula (II), a hydrophilic graft polymer obtained by introducing a hydrophilic polymer side chain into a trunk polymer having a functional group capable of reacting with the metal alkoxide can be used.

In the foregoing formula (II), R³, R⁴, R⁵ and R⁶ each independently represents the same substituent as in R¹ and R² in the foregoing formula (I). L² and L³ are synonymous with L¹ in the foregoing formula (I). B is represented by the foregoing formula (III); and R¹, R², L¹ and Y in the formula (III) are the same as those in the formulae (I) and (II). X is synonymous with X in the foregoing formula (I).

This hydrophilic graft polymer can be prepared by employing a method which is known as a general synthesis method of graft polymer. Concretely, the general synthesis method of graft polymer is described in *Graft Polymerization and Its Application,* written by Fumio IDE and published by Kobunshi Kankokai (1977) and Shin Kobunshi Jikken-gaku (New Polymer Experimentology) 2: Synthesis and Reaction of Polymer, edited by The Society of Polymer Science, Japan and published by Kyoritsu Shuppan Co., Ltd. (1995). These can be applied.

The synthesis method of graft polymer is basically classified into three methods of (1) a method of polymerizing a branched monomer from a trunk polymer, (2) a method of bonding a branched polymer to a trunk polymer and (3) a method of copolymerizing a branched polymer on a trunk polymer (macromer method). Though the hydrophilic graft polymer which is used in the invention can be prepared by using any of these three methods, the "macromer method" (3) is especially excellent from the viewpoints of manufacture aptitude and control of the film structure.

The synthesis of a graft polymer using a macromonomer is described in the foregoing Shin Kobunshi Jikkengaku (New Polymer Experimentology) 2: Synthesis and Reaction of Polymer, edited by The Society of Polymer Science, Japan and published by Kyoritsu Shuppan Co., Ltd. (1995). The synthesis of a graft polymer using a macromonomer is also described in detail in Chemistry and Industry of Macromonomer, written by Yu YAMASHITA, et al. and published by Industrial Publishing & Consulting, Inc. The graft polymer which is used in the invention can be first synthesized by copolymerizing a hydrophilic macromonomer synthesized by the foregoing method (corresponding to a precursor of the hydrophilic polymer side chain) with a monomer having a functional group capable of reacting with a crosslinking agent.

### (Hydrophilic macromonomer)

Among the hydrophilic macromonomers which are used in the invention, macromonomers derived from a carboxyl group-containing monomer (for example, acrylic acid and methacrylic acid); sulfonic acid based macromonomers derived from a monomer (for example, 2-acrylamido-2-methylpropanesulfonic acid, vinylstyrenesulfonic acid and salts thereof); amide based macromonomers (for example, acrylamide and methacrylamide); amide based macromonomers derived from an N-vinylcarboxylic acid amide monomer (for example, N-vinylacetamide and N-vinylformamide); macromonomers derived from a hydroxyl group-containing monomer (for example, hydroxyethyl methacrylate, hydroxyethyl acrylate and glycerol monomethacrylate) ; and macromonomers derived from an alkoxy group or ethylene oxide group-containing monomer (for example, methoxyethyl acry-late, methoxypolyethylene glycol acrylate and polyethylene glycol acrylate) are especially useful. Also, monomers having a polyethylene glycol chain or a polypropylene glycol chain can be usefully used as the macromonomer of the invention. With respect to these macromonomers, the useful polymer has a mass average molecular weight (hereinafter simply referred to as "molecular weight") in the range of from 400 to 100,000, preferably in the range of from 1, 000 to 50, 000, and especially preferably in the range of from 1,500 to 20,000. When the molecular weight is 400 or more, effective hydrophilicity is obtained; and when the molecular weight is not more than 100,000, the polymerizability with a copolymerization monomer for forming the principal chain tends to become high. The both are preferable.

Examples of the reactive functional group of the monomer having a functional group which is copolymerizable with the hydrophilic macromonomer and is able to react with the crosslinking agent (hereinafter properly referred to as "reactive functional group") include a carboxyl group or a salt thereof, an amino group, a hydroxyl group, a phenolic hydroxyl group, an epoxy group (for example, glycidyl), a methyl group, a (block) isocyanate group and a silane coupling agent. Examples of general monomers include monomers described in Crosslinking Agent Handbook, written by Shinzo YAMASHITA and Tosuke KANEKO and published by Taiseisha Ltd. (1981); Shigaisen Koka Shisutemu (Ultraviolet Ray Curing Systems), written by Kiyoshi KATO and published by Sogo Gijutsu Center (1989); UV or EB Curing Handbook (Raw Material Volume), written by Kiyoshi KATO and published by Kobunshi Kankokai (1985); and Shin Kankosei Jushi No Jissai Gijutsu (New Actual Technology of Photosensitive Resin), written by Kiyoshi AKAMATSU and published by CMC Publishing Co., Ltd. (pages 102 to 145, (1987)). Specific examples thereof include (meth) acrylic acid or alkali or amine salts thereof, itaconic acid or alkali or amine salts thereof, 2-hydroxyethyl (meth)acrylate, hydroxypropyl (meth)acrylate, a phenolic hydroxyl group-containing monomer represented, by the following formula (1), glycidyl methacrylate, allyl glycidyl ether, N-methylol methacrylamide, 2-methacryloyloxyethyl isocyanate, a block isocyanate monomer (for example, a block isocyanate group-containing monomer represented by the following formula (2)), a vinyl alkoxysilane and a γ-methacryloxypropyl trialkoxysilane.

### Phenolic hydroxyl group-containing monomer (1):

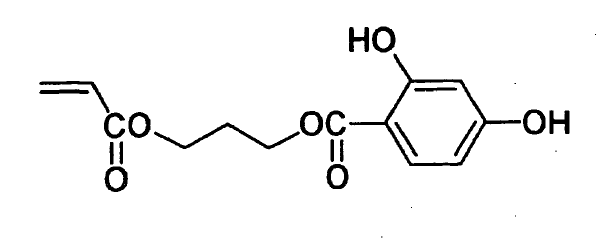

### Block isocyanate group-containing monomer (2):

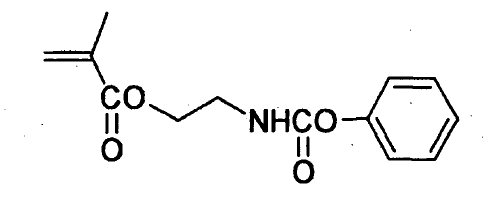

As these graft polymers, those having a mass average molecular weight of not more than 1,000,000 are preferably used. The molecular weight is more preferably in the range of from 1, 000 to 1, 000, 000, and further preferably in the range of from 20,000 to 100,000. When the molecular weight is not more than 1,000,000, in preparing a coating solution for forming a hydrophilic film, the solubility in a solvent does not become worse, and there is no problem in handling such that the viscosity of the coating solution is low and that a uniform film is easily formed. Therefore, such is preferable.

The foregoing hydrophilic polymer has a hydrophilic functional group capable of revealing hydrophilicity as represented by Y in the formula. The higher the density of this functional group, the higher the surface hydrophilicity is, and therefore, such is favorable. The density of the hydrophilic functional group can be expressed by the molar number of the functional group per gram of the hydrophilic polymer and is preferably from 1 to 30 meq/g, more preferably from 2 to 20 meq/g, and most preferably from 3 to 15 meq/g.

The copolymerization ratio of the hydrophilic polymer (II) can be arbitrarily set up such that the amount of the hydrophilic functional group Y falls within the foregoing range. With respect to a molar ratio (m) of the monomer containing B and a molar ratio (n) of the monomer containing X, the range of m/n = 30/70 to 99/1 is preferable, the range of m/n = 40/60 to 98/2 is more preferable, and the range of m/n = 50/50 to 97/3 is the most preferable. When m is a ratio of m/n = 30/70 or more, the hydrophilicity is not insufficient. On the other hand, when n is a ratio of m/n = 99/1 or more, the amount of the reactive group is sufficient, sufficient curing is obtained, and the film strength is sufficient.

The foregoing hydrophilic polymer forms a crosslinked film in a state that it is mixed with a hydrolysis and polycondensation product of the metal alkoxide. The hydrophilic polymer which is an organic component contributes to the film strength and film softness. In particular, when the viscosity of the hydrophilic polymer falls within the range of from 0.1 to 100 cPs (measured in a 5 % aqueous solution at 25 °C), preferably from 0.5 to 70 cPs, and more preferably from 1 to 50 cPs, good film physical properties are imparted. [Hydrophilic polymer represented by the formula (IV-a) or (IV-b)]

The hydrophilic polymer (A) which can be used in the invention has a structural unit represented by the following formula (IV-a) or (IV-b).

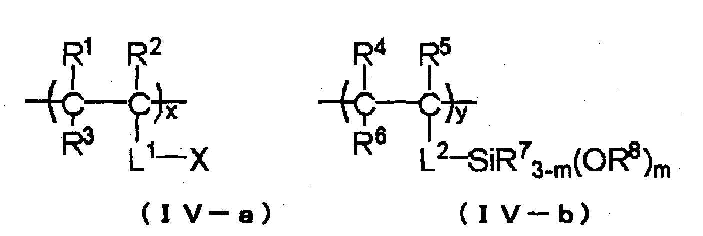

In the formulae (IV-a) and (IV-b), R¹ to R⁸ each independently represents a hydrogen atom or a hydrocarbon group having not more than 8 carbon atoms; L¹ represents a single bond or a polyvalent organic connecting group; L² represents a single bond or a polyvalent organic connecting group having at least one structure selected from the group consisting of -CONH-, -NHCONH-, -OCONH-, -SO₂NH- and -SO₃-; m represents an integer of from 1 to 3; x and y each represents a number of from 100 to 0 and is satisfied with the relationship of (x + y) = 100; X represents -OH, -ORₐ, -CORₐ, -CO₂Rₑ, -CON(Rₐ)(R_{b}), -N(Rₐ)(R_{b}), -NHCOR_{d}, -NHCO₂Rₐ, -OCON(Rₐ)(R_{b}), -NHCON(Rₐ) (R_{b}), -SO₃Rₑ, -OSO₃Re, -SO₂R_{d}, -NHSO₂R_{d}, -SO₂N(Rₐ) (R_{b}), -N(Rₐ) (R_{b}) (R_{c}), -N(Rₐ) (R_{b}) (R_{c}) (R_{g}), -PO₃(Rₑ) (R_{f}), -OPO₃(Rₑ) (R_{f}) or -PO₃(R_{d})(Rₑ), wherein Rₐ, R_{b} and R_{c} each independently represents a hydrogen atom or a linear, branched or cyclic alkyl group having from 1 to 8 carbon atoms; R_{d} represents a linear, branched or cyclic alkyl group having from 1 to 8 carbon atoms; Rₑ and R_{f} each independently represents a hydrogen atom, a linear, branched or cyclic alkyl group having from 1 to 8 carbon atoms, an alkali metal, an alkaline earth metal or an onium; and Rg represents a linear, branched or cyclic alkyl group having from 1 to 8 carbon atoms, a halogen atom, an inorganic anion or an organic anion.

When R¹ to R⁸ each represents a hydrocarbon group, examples of the hydrocarbon group include an alkyl group and an aryl group; and a linear, branched or cyclic alkyl group having from 1 to 8 carbon atoms is preferable. Specific examples thereof include a methyl group, an ethyl group, a propyl group, a butyl group, a pentyl group, a hexyl group, a heptyl group, an octyl group, an isopropyl group, an isobutyl group, an s-butyl group, a t-butyl group, an isopentyl group, a neopentyl group, a 1-methylbutyl group, an isohexyl group, a 2-ethylhexyl group, a 2-methylhexyl group and a cyclopentyl group.

From the viewpoints of effects and easiness of availability, R¹ to R⁸ are each preferably a hydrogen atom, a methyl group or an ethyl group.

Such a hydrocarbon group may further have a substituent. When the alkyl group has a substituent, the substituted alkyl group is constituted of a linkage between a substituent and an alkylene group. Here, a monovalent non-metal atomic group exclusive of hydrogen is used as the substituent. Preferred examples of the substituent include a halogen atom (for example, -F, -Br, -Cl and -I), a hydroxyl group, an alkoxy group, an aryloxy group, a mercapto group, an alkylthio group, an arylthio group, an alkyldithio group, an aryldithio group, an amino group, an N-alkylamino group, an N,N-diarylamino group, an N-alkyl-N-arylamino group, an acyloxy group, a carbamoyloxy group, an N-alkylcarbamoyloxy group, an N-arylcarbamoyloxy group, an N,N-dialkylcarbamoyloxy group, an N,N-diarylcarbamoyloxy group, an N-alkyl-N-arylcarbamoyloxy group, an alkylsulfoxy group, an arylsulfoxy group, an acylthio group, an acylamino group, an N-alkylacylamino group, an N-arylacylamino group, a ureido group, an N'-alkylureido group, an N' , N' -dialkylureido group, an N'-arylureido group, an N',N'-diarylureido group, an N'-alkyl-N'-arylureido group, an N-alkylureido group, an N-arylureido group, an N'-alkyl-N-alkylureido group, an N'-alkyl-N-arylureido group, an N',N'-dialkyl-N-alkylureido group, an N',N'-dialkyl-N-arylureido group, an N'-aryl-N-alkylureido group, an N'-aryl-N-arylureido group, an N',N'-diaryl-N-alkylureido group, an N',N'-diaryl-N-arylureido group, an N'-alkyl-N'-aryl-N-alkylureido group, an N'-alkyl-N'-aryl-N-arylureido group, an alkoxycarbonylamino group, an aryloxycarbonylamino group, an N-alkyl-N-alkoxycarbonylamino group, an N-alkyl-N-aryloxycarbonylamino group, an N-aryl-N-alkoxycarbonylamino group, an N-aryl-N-aryloxycarbonylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N,N-diarylcarbamoyl group, an N-alkyl-N-arylcarbamoyl group, an alkylsulfinyl group, an arylsulfinyl group, an alkylsulfonyl group, an arylsulfonyl group, a sulfo group (-SO₃H) or a conjugated base group thereof (hereinafter referred to as "sulfonate group"), an alkoxysulfonyl group, an aryloxysulfonyl group, a sulfinamoyl group, an N-alkylsulfinamoyl group, an N,N-dialkyl-sulfinamoyl group, an N-arylsulfinamoyl group, an N,N-diarylsulfinamoyl group, an N-alkyl-N-arylsulfinamoyl group, a sulfamoyl group, an N-alkylsulfamoyl group, an N,N-dialkylsulfamoyl group, an N-arylsulfamoyl group, an N,N-diarylsulfamoyl group, an N-alkyl-N-arylsulfamoyl group, a phosphono group (-PO₃H₂) or a conjugated base group thereof (hereinafter referred to as "phosphonate group"), a dialkylphosphono group (-PO₃(alkyl)₂), a diarylphosphono group (-PO₃(aryl)₂), an alkylarylphosphono group (-PO₃(alkyl)(aryl)), a monoalkylphosphono group (-PO₃H(alkyl)) or a conjugated base group thereof (hereinafter referred to as "alkylphosphonate group"), a monoarylphosphono group (-PO₃H(aryl))) or a conjugated base group thereof (hereinafter referred to as "arylphosphonate group"), a phosphonoxy group (-OPO₃H₂) or a conjugated base group thereof (hereinafter referred to as "phosphonatoxy group"), a dialkylphosphonoxy group (-OPO₃(alkyl)₂), a diarylphosphonoxy group (-OPO₃(aryl)₂), an alkylarylphosphonoxy group (-OPO(alkyl)(aryl)), a monoalkylphosphonoxy group (-OPO₃H(alkyl)) or a conjugated base group thereof (hereinafter referred to as "alkylphosphonatoxy group"), a monoarylphosphonoxy group (-OPO₃H(aryl)) or a conjugated base group thereof (hereinafter referred to as "arylphosphonatoxy group"), a morpholino group, a cyano group, a nitro group, an aryl group, an alkenyl group and an alkynyl group.

In these substituents, specific examples of the alkyl group include the same alkyl groups as those in R¹ to R⁸; and specific examples of the aryl group include a phenyl group, a biphenyl group, a naphthyl group, a tolyl group, a xylyl group, a mesityl group, a cumenyl group, a chlorophenyl group, a bromophenyl group, a chloromethylphenyl group, a hydroxyphenyl group, a methoxyphenyl group, an ethoxyphenyl group, a phenoxyphenyl group, an acetoxyphenyl group, a benzoyloxyphenyl group, a methylthiophenyl group, a phenylthiophenyl group, a methylaminophenyl group, a dimethylaminophenyl group, an acetylaminophenyl group, a carbxoyphenyl group, a methoxycarbonylphenyl group, an ethoxyphenylcarbonyl group, a phenoxycarbonylphenyl group, an N-phenylcarbamoylphenyl group, a phenyl group, a cyanophenyl group, a sulfophenyl group, a sulfonatophenyl group, a phosphonophenyl group and a phosphonatophenyl group. Also, examples of the alkenyl group include a vinyl group, a 1-propenyl group, a 1-butenyl group, a cinnamyl group and a 2-chloro-1-ethenyl group; and examples of the alkynyl group include an ethynyl group, a 1-propynyl group, a 1-butynyl group and a trimethylsilylethynyl group. Examples of G¹ in an acyl group (G¹CO-) include hydrogen and the foregoing alkyl groups and aryl groups.

Of these substituents, a halogen atom (for example, -F, -Br, -Cl and -I), an alkoxy group, an aryloxy group, an alkylthio group, an arylthio group, an N-alkylamino group, an N,N-dialkylamino group, an acyloxy group, an N-alkylcarbamoyloxy group, an N-arylcarbamoyloxy group, an acylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N-alkyl-N-arylcarbamoyl group, a sulfo group, a sulfonate group, a sulfamoyl group, an N-alkylsulfamoyl group, an N,N-dialkylsulfamoyl group, an N-arylsulfamoyl group, an N-alkyl-N-arylsulfamoyl group, a phosphono group, a phosphonate group, a dialkylphosphono group, a diarylphosphono group, a monoalkylphosphono group, an alkylphosphonate group, a monoarylphosphono group, an arylphosphonate group, a phosphonoxy group, a phosphonatoxy group, an aryl group and an alkenyl group are more preferable.

On the other hand, as the alkylene group in the substituted alkyl group, an alkylene group obtained by eliminating any one of hydrogen atoms on each of the foregoing alkyl groups to convert the resulting alkyl group into a divalent organic residue can be exemplified. Preferred examples thereof include a linear alkylene group having from 1 to 12 carbon atoms, a branched alkylene group having from 3 to 12 carbon atoms and a cyclic alkylene group having from 5 to 10 carbon atoms. Specific examples of the preferred substituted alkyl group obtained by combining these substituent and alkylene group include a chloromethyl group, a bromomethyl group, a 2-chloroethyl group, a trifluoromethyl group, a methoxymethyl group, a methoxyethoxyethyl group, an allyloxymethyl group, a phenoxymethyl group, a methylthiomethyl group, a tolylthiomethyl group, an ethylaminoethyl group, a diethylaminopropyl group, a morpholinopropyl group, an acetyloxymethyl group, a benzoyloxymethyl group, an N-cyclohexylcarbamoyloxyethyl group, an N-phenylcarbamoyloxyethyl group, an acetylaminoethyl group, an N-methylbenzoylaminopropyl group, a 2-oxyethyl group, a 2-oxypropyl group, a carboxypropyl group, a methoxycarbonylethyl group, an allyloxycarbonylbutyl group, a chlorophenoxycarbonylmethyl group, a carbamoylmethyl group, an N-methylcarbamoylethyl group, an N,N-dipropyl-carbamoylmethyl group, an N-(methoxyphenyl)carbamoylethyl group, an N-methyl-N-(sulfophenyl)carbamoylmethyl group, a sulfobutyl group, a sulfonatobutyl group, a sulfamoylbutyl group, an N-ethylsulfamoylmethyl group, an N,N-dipropyl-sulfamoylpropyl group, an N-tolylsulfamoylpropyl group, an N-methyl-N-(phosphonophenyl)sulfamoyloctyl group, a phosphonobutyl group, a phosphonatohexyl group, a diethylphosphonobutyl group, a diphenylphosphonopropyl group, a methylphosphonobutyl group, a methylphosphonatobutyl group, a tolylphosphonohexyl group, a tolylphosphonatohexyl group, a phosphonoxypropyl group, a phosphonatoxybutyl group, a benzyl group, a phenethyl group, an α-methylbenzyl group, a 1-methyl-1-phenylethyl group, a p-methylbenzyl group, a cinnamyl group, an allyl group, a 1-propenylmethyl group, a 2-butenyl group, a 2-methylallyl group, a 2-methyl-propenylmethyl group, a 2-propenyl group, a 2-butynyl group and a 3-butynyl group.

L¹ represents a single bond or a polyvalent organic connecting group. The "single bond" as referred to herein means that for example, the principal chain of the polymer is bonded directly to X without a connecting chain. Furthermore, the "organic connecting group" as referred to herein means a connecting group composed of a non-metal atom. Specific examples of the connecting group include those composed of from 1 to 200 carbon atoms, from 0 to 150 nitrogen atoms, from 0 to 200 oxygen atoms, from 0 to 400 hydrogen atoms and from 0 to 100 sulfur atoms. More specific examples of the connecting group include the following structural units or those constituted through a combination thereof.

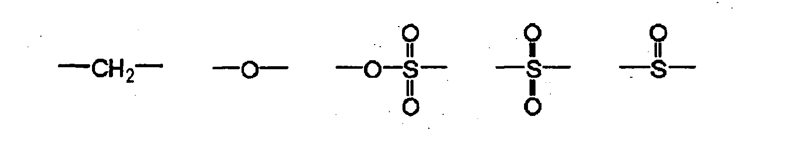

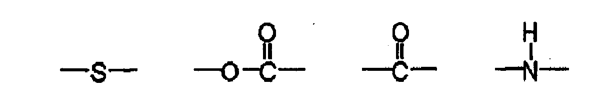

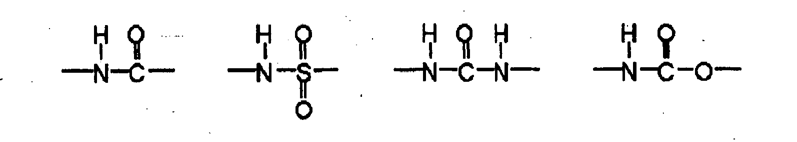

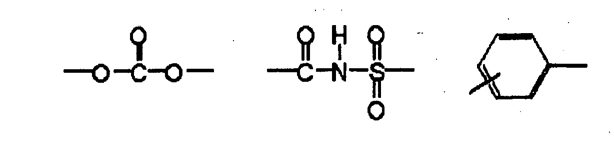

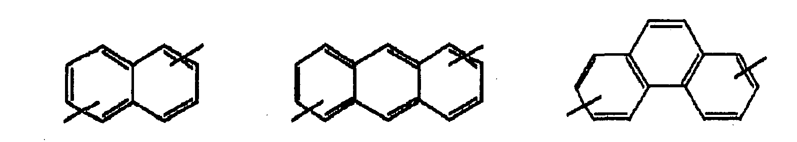

Also, L¹ may be formed from a polymer or an oligomer. Concretely, it is preferable that the polymer or oligomer includes polyacrylates, polymethacrylates, polyacrylonitriles, polyvinyls or polystyrenes each composed of an unsaturated double bond based monomer, or the like. Other preferred examples thereof include poly(oxyalkylenes), polyurethanes, polyureas, polyesters, polyamides, polyimides, polycarbonates, polyamino acids and polysiloxanes. Of these, polyacrylates, polymethacrylates, polyacrylonitriles, polyvinyls and polystyrenes are preferable, with polyacrylates and polymethacrylates being more preferable.

The structural unit which is used in such a polymer or oligomer may be used singly or in combination of two or more kinds thereof. In the case where L¹ is a polymer or an oligomer, the number of constitutional elements is not particularly limited, and its molecular weight is preferably from 1,000 to 1,000,000, more preferably from 1,000 to 500,000, and most preferably from 1,000 to 200,000.

L² represents a single bond or a polyvalent organic connecting group having one or more structures selected from the group consisting of -CONH-, -NHCONH-, -OCONH-, -SO₂NH- and -SO₃-. The "single bond" as referred to herein means that the principal chain of the polymer is bonded directly to the Si atom without a connecting chain. Also, two or more of the foregoing structures may be present in L². In that case, the structures may be the same or different each other. So far as one or more of the foregoing structures are contained, other structure can have the same structure as that exemplified in L¹.

Also, X is a hydrophilic group and represents -OH, -ORₐ, -CORₐ, -CO₂Rₑ, -CON (Rₐ) (R_{b}), -N(Rₐ)(R_{b}), -NHCOR_{d}, -NHCO₂Rₐ, -OCON (Rₐ) (R_{b}), -NHCON(Rₐ) (R_{b}), -SO₃Rₑ, -OSO₃Rₑ, -SO₂R_{d}, -NHSO₂R_{d}, -SO₂N (Rₐ) (R_{b}), -N (Rₐ) (R_{b}) (R_{c}), -N (Rₐ) (R_{b}) (R_{c}) (R_{g}) -PO₃ (Rₑ) (R_{f}), -OPO₃ (Rₑ) (R_{f}) or -PO₃(R_{d})(Rₑ), wherein Rₐ, R_{b} and R_{c} each independently represents a hydrogen atom or a linear, branched or cyclic alkyl group having from 1 to 8 carbon atoms; R_{d} represents a linear, branched or cyclic alkyl group having from 1 to 8 carbon atoms; Rₑ and R_{f} each independently represents a hydrogen atom, a linear, branched or cyclic alkyl group having from 1 to 8 carbon atoms, an alkali metal, an alkaline earth metal or an onium; and Rg represents a linear, branched or cyclic alkyl group having from 1 to 8 carbon atoms, a halogen atom, an inorganic anion or an organic anion. With respect to -CON(Rₐ) (R_{b}), -OCON (Rₐ) (R_{b}), -NHCON (Rₐ) (R_{b}), -SO₂N(Rₐ) (R_{b}), -PO₃(Rₑ)(R_{f}), -OPO₃(Rₑ) (R_{f}), -PO₃(R_{d}) (Rₑ), -N(Rₐ) (R_{b}) (R_{c}) or -N(Rₐ) (R_{b}) (R_{c}) (R_{g}), Rₐ to R_{g} may be taken together to form a ring. The formed ring may be a hetero ring containing a hetero atom such as an oxygen atom, a sulfur atom and a nitrogen atom. Each of Rₐ to Rg may further have a substituent. Examples of the substituent which can be introduced include the same substituents as those which can be introduced in the case where each of R¹ to R⁸ is an alkyl group.

Concretely, favorable examples of Rₐ, R_{b} and R_{c} include a hydrogen atom, a methyl group, an ethyl group, a propyl group, a butyl group, a pentyl group, a hexyl group, a heptyl group, an octyl group, an isopropyl group, an isobutyl group, an s-butyl group, a t-butyl group, an isopentyl group, a neopentyl group, a 1-methylbutyl group, an isohexyl group, a 2-ethylhexyl group, a 2-methylhexyl group and a cyclopentyl group.

Concretely, favorable examples of R_{d} include a methyl group, an ethyl group, a propyl group, a butyl group, a pentyl group, a hexyl group, a heptyl group, an octyl group, an isopropyl group, an isobutyl group, an s-butyl group, a t-butyl group, an isopentyl group, a neopentyl group, a 1-methylbutyl group, an isohexyl group, a 2-ethylhexyl group, a 2-methylhexyl group and a cyclopentyl group.

Concretely, examples of Rₑ and R_{f} include, in addition to the alkyl groups as exemplified in Rₐ to R_{d}, a hydrogen atom; an alkali metal (for example, lithium, sodium and potassium) ; an alkaline earth metal (for example, calcium and barium) ; and an onium (for example, ammonium, iodonium and sulfonium).

Concretely, examples of R_{g} include, in addition to the alkyl groups as exemplified in Rₐ to R_{d}, a hydrogen atom; a halogen atom (for example, a fluorine atom, a chlorine atom and a bromine atom) ; an inorganic anion (for example, a nitric acid anion, a sulfuric acid anion, a tetrafluoroboric acid anion and a hexafluorophosphoric acid anion); and an organic anion (for example, a methanesulfonic acid anion, a trifluoromethanesulfonic acid anion, a nonafluorobutanesulfonic acid anion and a p-toluenesulfonic acid anion).

Also, concretely, preferred examples of X include -CO₂-Na⁺, -CONH₂, -SO₃-Na⁺, -SO₂NH₂ and -PO₃H₂.

x and y are each a polymerization ratio of the structural unit represented by the formula (IV-a) and the structural formula represented by the formula (IV-b) in the hydrophilic polymer (A). x and y each represents a number of from 100 to 0 and is satisfied with the relationship of (x + y) = 100. The copolymerization ratio x/y is preferably in the range of 99/1 to 10/90, and more preferably in the range of from 99/1 to 50/50.

Here, (IV-a) and (IV-b) which are each a structural unit for constituting the polymer chain may be all the same or may be one containing plural different structural units. In that case, it is preferable that the copolymerization ratio of the structural unit corresponding to the formula (IV-a) and the structural unit corresponding to the formula (IV-b) falls within the foregoing ranges.

Specific examples of the hydrophilic polymers represented by the formulae (II), (IV-a) and (IV-b) [Illustrative Compounds (II-I) to (II-50)] will be given below along with mass average molecular weights (M.W.) thereof, but it should not be construed that the invention is limited thereto. In the following specific examples, it is meant by numerical values as described by the side of parentheses of respective structural units on the polymer principal chain that the polymer is a random copolymer in which the respective structural units are contained in the designated molar ratio.

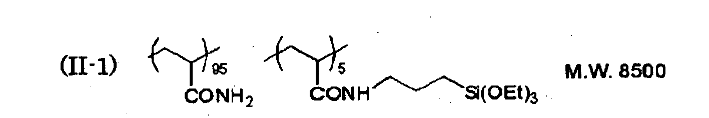

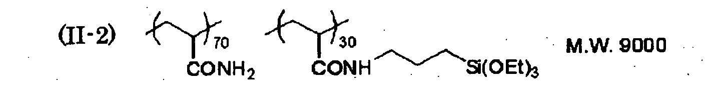

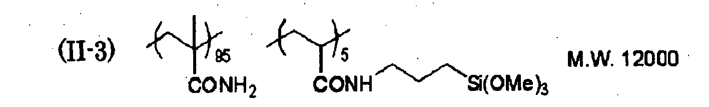

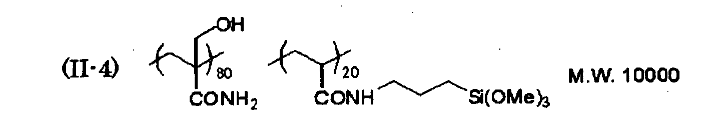

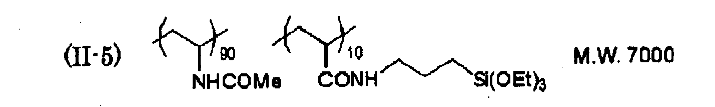

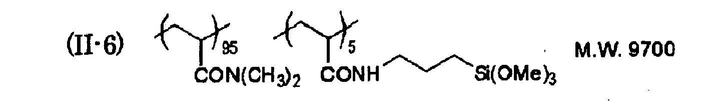

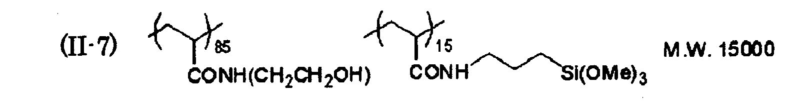

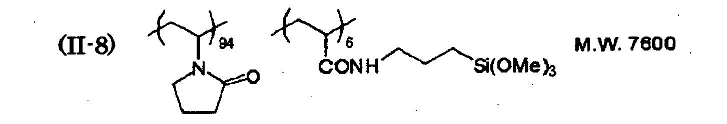

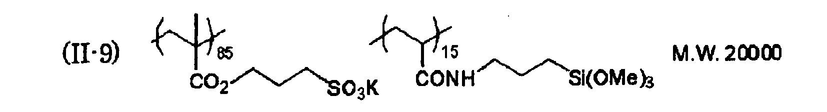

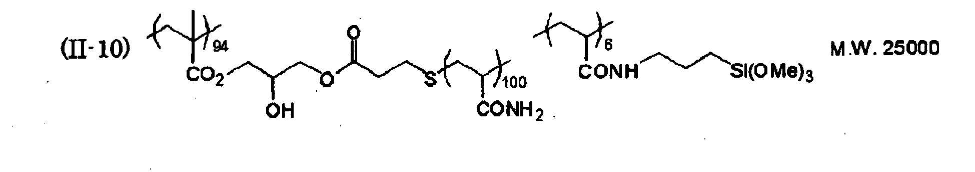

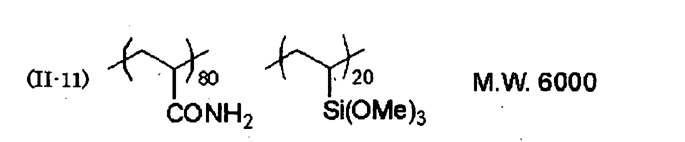

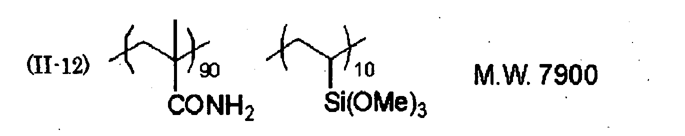

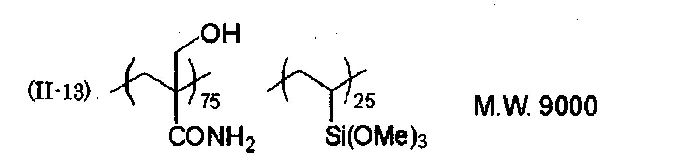

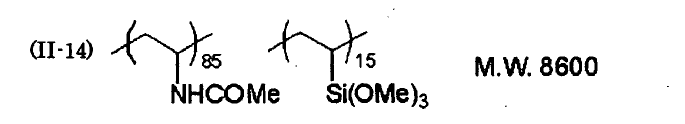

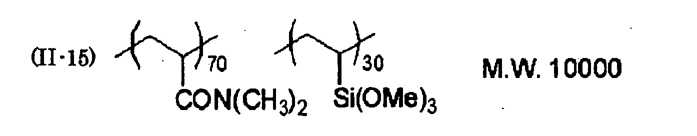

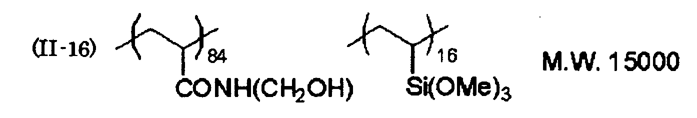

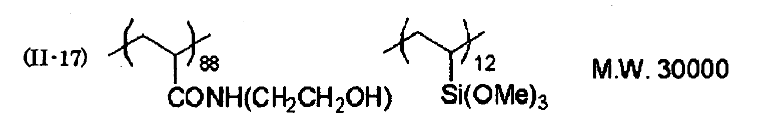

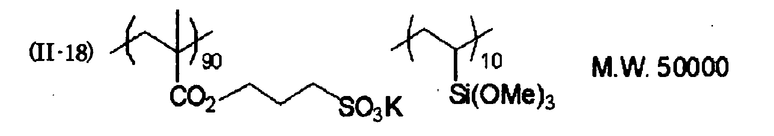

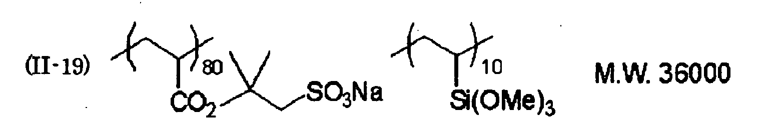

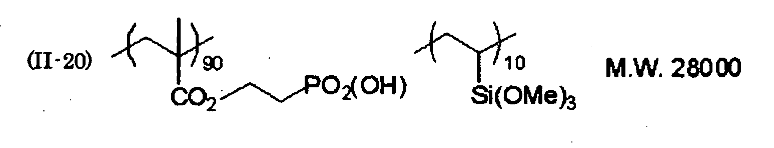

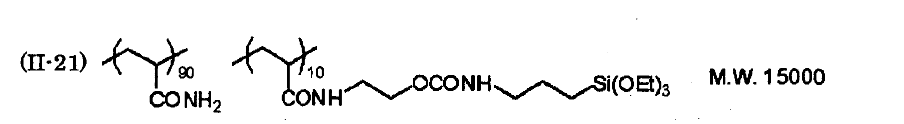

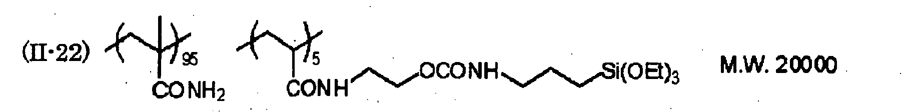

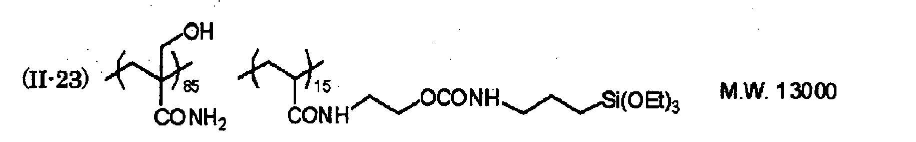

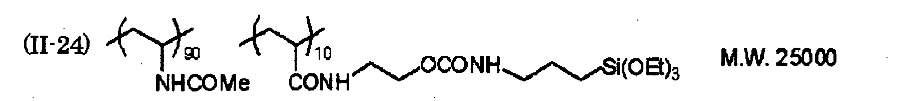

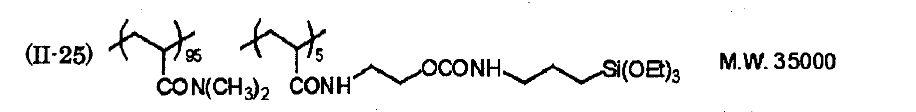

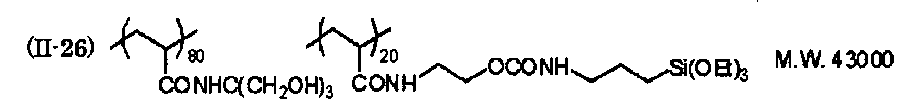

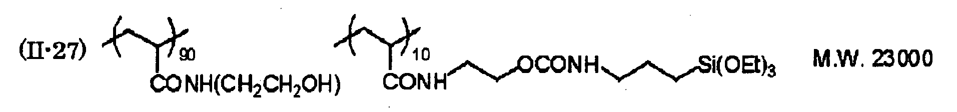

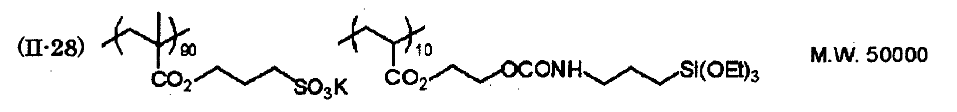

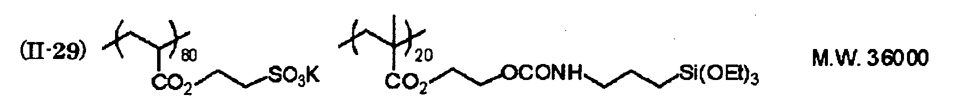

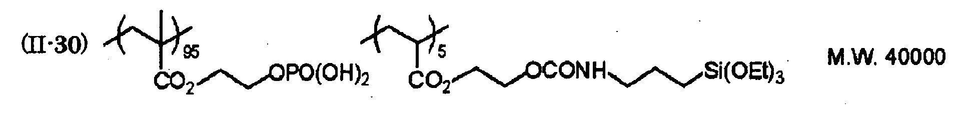

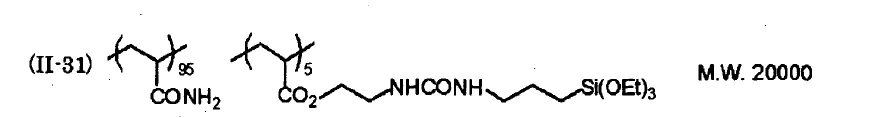

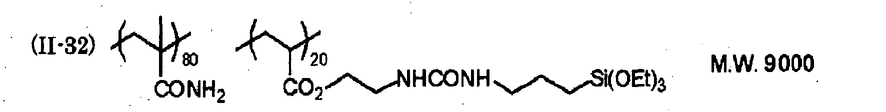

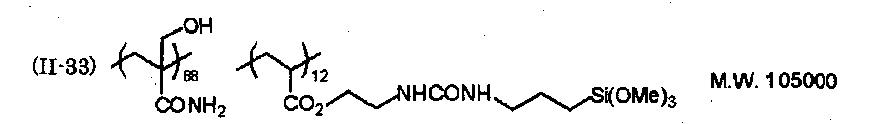

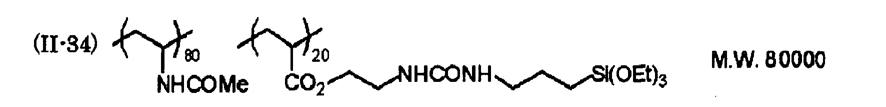

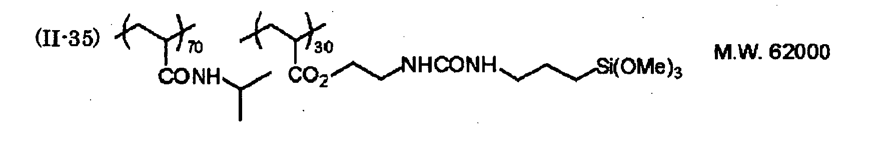

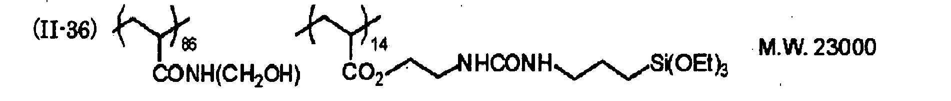

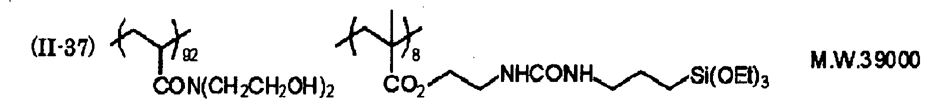

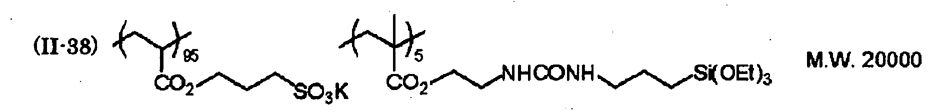

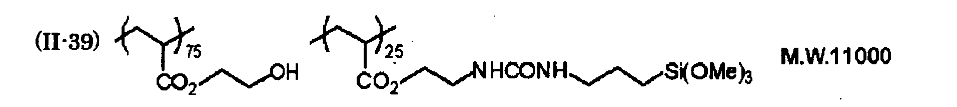

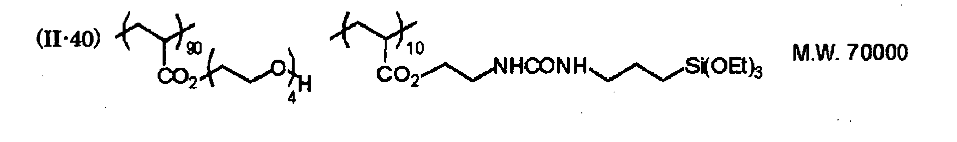

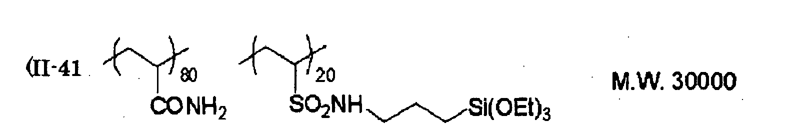

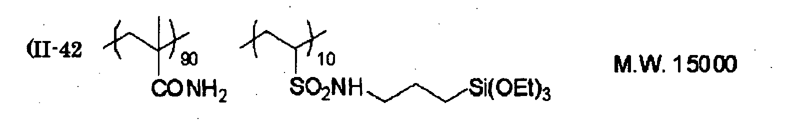

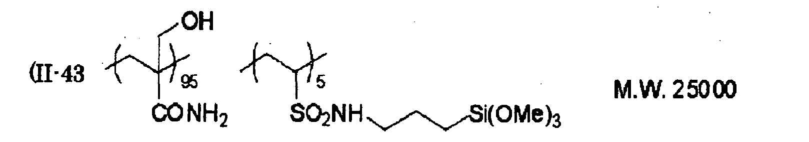

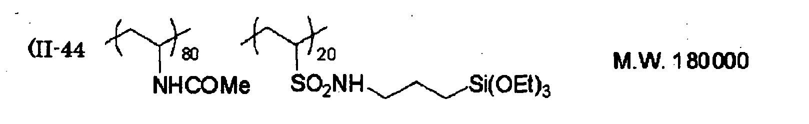

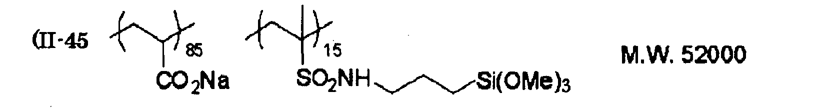

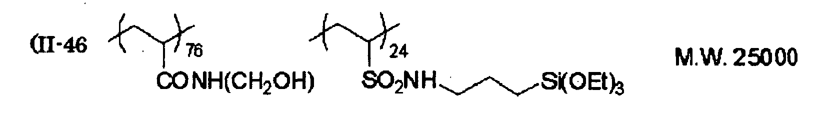

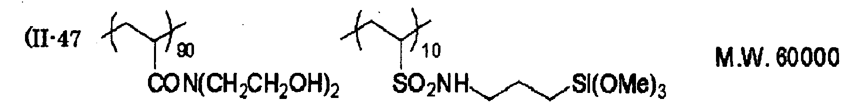

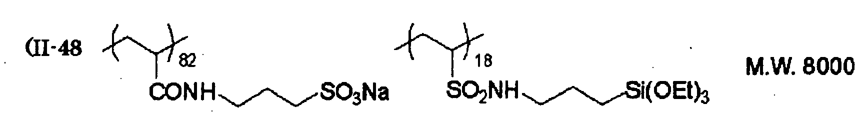

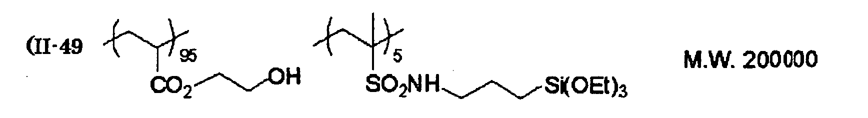

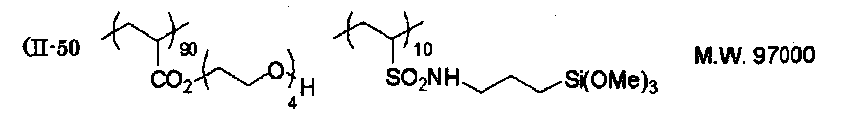

Each of the foregoing compounds for synthesizing the hydrophilic polymers represented by the formulae (II), (IV-a) and (IV-b) is commercially available and can be easily synthesized.

As the radical polymerization method for synthesizing the hydrophilic polymers represented by the formulae (II), (IV-a) and (IV-b), all of conventionally known methods can be employed. Concretely, the general radical polymerization method is described in, for example, Shin Kobunshi Jikken-gaku (New Polymer Experimentology) 3: Synthesis and Reaction 1 of Polymer (edited by The Society of Polymer Science, Japan and published by Kyoritsu Shuppan Co., Ltd.); Shin Jikken Kagaku Koza (New Experimental Chemistry Course) 19: Polymer Chemistry (I) (edited by The Chemical Society of Japan and published by Maruzen Co., Ltd.); and Busshitsu Kogaku Koza (Material Engineering Course): Polymer Synthesis Chemistry (published by Tokyo Denki University Press). These can be applied.

Also, the hydrophilic polymers represented by the formulae (II), (IV-a) and (IV-b) may be a copolymer with other monomer as described later. Examples of other monomer which can be used include known monomers, for example, acrylic esters, methacrylic esters, acrylamides, methacrylamides, vinyl esters, styrenes, acrylic acid, methacrylic acid, acrylonitrile, maleic anhydride and maleic acid imide. By copolymerizing with- such a monomer, various physical properties, for example, fabrication properties, film strength, hydrophilicity, hydrophobicity, solubility, reactivity and stability can be improved.

Specific examples of the acrylic ester include methyl acrylate, ethyl acrylate, n-propyl or isopropyl acrylate, n-butyl, isobutyl, sec-butyl or t-butyl acrylate, amyl acrylate, 2-ethylhexyl acrylate, dodecyl acrylate, chloroethyl acrylate, 2-hydroxyethyl acrylate, 2-hydroxypropyl acrylate, 2-hydroxypentyl acrylate, cyclohexyl acrylate, allyl acrylate, trimethylolpropane monoacrylate, pentaerythritol monoacrylate, benzyl acrylate, methoxybenzyl acrylate, chlorobenzyl acrylate, hydroxybenzyl acrylate, hydroxyphenethyl acrylate, dihydroxyphenethyl acrylate, furfuryl acrylate, tetrahydrofurfuryl acrylate, phenyl acrylate, hydroxyphenyl acrylate, chlorophenyl acrylate, sulfamoylphenyl acrylate and 2-(hydroxyphenyl-carbonyloxy)ethyl acrylate.

Specific examples of the methacrylic ester include methyl methacrylate, ethyl methacrylate, n-propyl or isopropyl methacrylate, n-butyl, isobutyl, sec-butyl or t-butyl methacrylate, amyl methacrylate, 2-ethylhexyl methacrylate, dodecyl methacrylate, chloroethyl methacrylate, 2-hydroxyethyl methacrylate, 2-hydroxypropyl methacrylate, 2-hydroxypentyl methacrylate, cyclohexyl methacrylate, allyl methacrylate, trimethylolpropane monomethacrylate, pentaerythritol monomethacrylate, benzyl methacrylate, methoxybenzyl methacrylate, chlorobenzyl methacrylate, hydroxybenzyl methacrylate, hydroxyphenethyl methacrylate, dihydroxyphenethyl methacrylate, furfuryl methacrylate, tetrahydrofurfuryl methacrylate, phenyl methacrylate, hydroxyphenyl methacrylate, chlorophenyl methacrylate, sulfamoylphenyl methacrylate and 2-(hydroxyphenyl-carbonyloxy)ethyl methacrylate.

Specific examples of the acrylamide include acrylamide, N-methylacrylamide, N-ethylacrylamide, N-propylacrylamide, N-butylacrylamide, N-benzylacrylamide, N-hydroxyethyl-acrylamide, N-phenylacrylamide, N-toltylacrylamide, N-(hydroxyphenyl)acrylamide, N-(sulfamoylphenyl)acrylamide, N-(phenylsulfonyl)acrymaide, N-(tolylsulfonyl)acrylamide, N,N-dimethylacrylamide, N-methyl-N-phenylacrylamide and N-hydroxyethyl-N-methylacrylamide.

Specific examples of the methacrylamide include methacrylamide, N-methylmethacrylamide, N-ethylmethacryl-amide, N-propylmethacrylamide, N-butylmethacrylamide, N-benzylmethacrylamide, N-hydroxyethylmethacrylamide, N-phenylmethacrylamide, N-toltylmethacrylamide, N-(hydroxyphenyl)methacrylamide, N-(sulfamoylphenyl)methacrylamide, N-(phenylsulfonyl)methacrymaide, N-(tolyl-sulfonyl)methacrylamide, N,N-dimethylmethacrylamide, N-methyl-N-phenylmethacrylamide and N-hydroxyethyl-N-methylmethacrylamide.

Specific examples of the vinyl ester include vinyl acetate, vinyl butyrate and vinyl benzoate.

Specific examples of the styrene include styrene, methylstyrene, dimethylstyrene, trimethylstyrene, ethylstyrene, propylstyrene, cyclohexylstyrene, chloromethylstyrene, trifluoromethylstyrene, ethoxymethylstyrene, acetoxymethylstyrene, methoxystyrene, dimethoxystyrene, chlorostyrene, dichlorostyrene, bromostyrene, iodostyrene, fluorostyrene-and carboxystyrene.

With respect to the proportion of such other monomer to be used for the synthesis of a copolymer, a sufficient amount for improving various physical properties is necessary. However, in order that the function as the hydrophilic film may be sufficient and that advantages to be brought by adding the hydrophilic polymer (A) may be sufficiently obtained, it is preferable that the proportion is not excessively high. Accordingly, a total proportion of other monomer in the hydrophilic polymer (A) is preferably not more than 80 % by mass, and more preferably not more than 50 % by mass.

The molecular weight of the hydrophilic polymer (A) is preferably from 1, 000. to 1, 000, 000, more preferably from 1, 000 to 500,000, and most preferably 1,000 to 200,000.

From the viewpoints of curing properties and hydrophilicity, the hydrophilic polymer (A) according to the invention is preferably contained in an amount in the range of from 5 to 95 % by mass, more preferably from 15 to 90 % by mass, and most preferably from 20 to 85 % by mass relative to a non-volatile component of the hydrophilic composition of the invention. The hydrophilic polymer (A) may be used singly or in combination of two or more kinds thereof. The "non-volatile component" as referred to herein means a component exclusive of a volatile solvent.

### [(B) Metal element selected among Si, Ti, Zr and Al]

It is preferable that the metal element (B) selected among Si, Ti, Zr and Al, which is used in the invention, is used by adding an alkoxide compound of a metal element selected among Si, Ti, Zr and Al (hereinafter often referred to as "metal alkoxide compound (B)" or "alkoxide compound (B)") to the hydrophilic composition.

The metal alkoxide compound is a hydrolyzable, polymerizable compound having a polymerizable functional group in a structure thereof and functioning as a crosslinking agent, and when polycondensed with the hydrophilic polymer (A), it forms a firm film having a crosslinking structure.

Also, the crosslinking structure in which the metal alkoxide compound is hydrolyzed and polycondensed forms a film which is a cured film having high crosslinking density and which is excellent in strength and satisfactory in durability. For that reason, it is possible to always provide a normal hydrophilic layer surface without causing a problem that the hydrophilic surface provided on a substrate such as a glass substrate and a plastic substrate generates a fault such as cracking against bending at the time of handling in the manufacture or the like.

The metal alkoxide compound (B) is preferably a compound represented by the following formula (IV), and in order to cure the hydrophilic film, in forming a crosslinking structure, it is preferable to mix the foregoing hydrophilic polymer (A) and the metal alkoxide compound (B) represented by the formula (IV) and coating the mixture on a surface of a substrate, followed by heating and drying.

Formula (IV) **(R⁹)ₖ-Y-(OR¹⁰)₄₋ₖ**

In the formula (IV), R⁹ represents a hydrogen atom, an alkyl group or an aryl group; R¹⁰ represents an alkyl group or an aryl group; Y represents Si, Al, Ti or Zr; and k represents an integer of from 0 to 2. When R⁹ and R¹⁰ each represents an alkyl group, the carbon atom number of the alkyl group is preferably from 1 to 4. The alkyl group and the aryl group may each have a substituent, and examples of the substituent which can be introduced include a halogen atom, an amino group and a mercapto group. This compound is preferably a low-molecular weight compound having a molecular weight of not more than 1,000.

Specific examples of the metal alkoxide compound (B) represented by the formula (IV) will be given below, but it should not be construed that the invention is limited thereto. In the case where Y represents Si, namely silicon is contained in the specified alkoxide, examples thereof include trimethoxysilane, triethoxysilane, tripropoxysilane, tetramethoxysilane, tetraethoxysilane, tetrapropoxysilane, methyltrimethoxysilane, ethyltrimethoxysilane, propyltrimethoxysilane, methyltriethoxysilane, ethyltriethoxysilane, propyltriethoxysilane, dimethyldimethoxysilane, diethyldiethoxysilane, γ-chloropropyltriethoxysilane, γ-mercaptopropyltrimethoxysilane, γ-mercaptopropyltriethoxysilane, γ-aminopropyltriethoxysilane, phenyltrimethoxysilane, phenyltriethoxysilane, phenyltripropoxysilane, diphenyldimethoxysilane and diphenyldiethoxysilane. Of these, tetramethoxysilane, tetraethoxysilane, methyltrimethoxysilane, ethyltrimethoxysilane, methyltriethoxysilane, ethyltriethoxysilane, dimethyldiethoxysilane, phenyltrimethoxysilane, phenyltriethoxysilane, diphenyldimethoxysilane and diphenyldiethoxysilane are especially preferable.

In the case where Y represents A1, namely aluminum is contained in the specified alkoxide, examples thereof include trimethoxy aluminate, triethoxy aluminate, tripropoxy aluminate and tetraethoxy aluminate.

In the case where Y represents Ti, namely titanium is contained in the specified alkoxide, examples thereof include trimethoxy titanate, tetramethoxy titanate, triethoxy titanate, tetraethoxy titanate, tetrapropoxy titanate, chlorotrimethoxy titanate, chlorotriethoxy titanate, ethyltrimethoxy titanate, methyltriethoxy titanate, ethyltriethoxy titanate, diethyldiethoxy titanate, phenyltrimethoxy titanate and phenyltriethoxy titanate.

In the case where Y represents Zr, namely zirconium is contained in the specified alkoxide, examples thereof include zirconates corresponding to the above-exemplified titanium-containing compounds.

Of these, alkoxides wherein Y represents Si are preferable from the viewpoint of film properties.

The metal alkoxide compound (B) according to the invention may be used singly or in combination of two or more kinds thereof.

The metal alkoxide compound (B) is preferably used in an amount in the range of from 5 to 80 % by mass, and more preferably from 10 to 70 % by mass in terms of a non-volatile component in the hydrophilic composition of the invention.

The metal alkoxide compound (B) is easily available as a commercial product and is also obtainable by a known synthesis method, for example, a reaction between each metal chloride and an alcohol.

### [(C) Catalyst]

In the hydrophilic composition of the invention, by dissolving the hydrophilic polymer (A) and further a crosslinking component such as the metal alkoxide compound (B) in a solvent and well stirring the solution, these components are hydrolyzed and polycondensed to form an organic/inorganic composite sol liquid, and a hydrophilic film having high hydrophilicity and high film strength is formed by this sol liquid. In preparing the organic/inorganic composite sol liquid, in order to accelerate the hydrolysis and polycondensation reaction, it is preferable to use (C) a catalyst.

It is preferable that an acidic catalyst or a basic catalyst is used jointly as the catalyst (C) to be used in the invention.

Also, in the invention, it is preferable to use a catalyst. By using the catalyst, it is possible to set up the drying temperature for forming a hydrophilic layer film low and to inhibit thermal deformation on an antibacterial agent or a base material plate.

As the catalyst (C) which is used in the invention, a catalyst capable of hydrolyzing and polycondensing the foregoing alkoxide compound (B) and accelerating a reaction for forming a linkage with the hydrophilic polymer (A) is chosen. As the catalyst (C), an acidic or basic compound is used as it is; or an acidic or basic compound is used in a state that it is dissolved in a solvent such as water and alcohols (these catalysts will be hereinafter also referred to inclusively as "acidic catalyst" and "basic catalyst", respectively). In dissolving the acidic or basic compound in a solvent, its concentration is not particularly limited and may be properly chosen depending upon characteristics of the acidic or basic compound to be used, a desired content of the catalyst, etc. Here, in the case where the concentration of the acidic or basic compound which constitutes the catalyst is high, the rate of hydrolysis and polycondensation tends to become fast. However, when a basic catalyst of a high concentration is used, there may be a possibility that a precipitate is formed in the sol solution. Therefore, when the basic catalyst is used, its concentration is desirably not more than 1 N as calculated in terms of a concentration in the aqueous solution.

The kind of the acidic catalyst or basic catalyst is not particularly limited. When it is required to use a catalyst having a high concentration, a catalyst constituted of an element which does not substantially remain in the coating film after drying is desirable. Concretely, examples of the acidic catalyst include hydrogen halides (for example, hydrochloric acid), nitric acid, sulfuric acid, sulfurous acid, hydrogen sulfide, perchloric acid, hydrogen peroxide, carbonic acid, carboxylic acids (for example, formic acid and acetic acid) and substituted carboxylic acids in which in a structural formula represented by RCOOH, R is substituted with other element or a substituent and sulfonic acids (for example, benzenesulfonic acid); and examples of the basic compound include ammoniacal bases (for example, ammonia water) and amines (for example, ethylamine and aniline).

Also, in addition to the foregoing metals, a Lewis acid catalyst composed of a metal complex can be favorably used. The catalyst is especially preferably a metal complex catalyst. Examples of the metal complex catalyst include metal complexes constituted of a metal element selected among those belonging to the groups 2A, 3B, 4A and 5A of the periodic table and an oxo or hydroxyl oxygen-containing compound selected among β-diketones, keto esters, hydroxycarboxylic acids or esters thereof, amino alcohols and etholic active hydrogen compounds.

Of the constitutional metal elements, elements of the group 2A (for example, Mg, Ca, Sr and Ba), elements of the group 3B (for example, Al and Ga), elements of the group 4A (for example, Ti and Zr) and elements of the group 5A (for example, V, Nb and Ta) are preferable, and each of them forms a complex having an excellent catalytic effect. Above all, complexes obtained from Zr, Al or Ti are excellent and preferable.

In the invention, examples of the oxo or hydroxyl oxygen-containing compound which constitutes a ligand of the foregoing metal complex include β-diketones (for example, acetylacetone, acetylacetone (2,4-pentanedione) and 2,4-heptanedione), keto esters (for example, methyl acetoacetate, ethyl acetoacetate and butyl acetoacetate), hydroxycarboxylic acids and esters thereof (for example, lactic acid, methyl lactate, salicylic acid, ethyl salicylate, phenyl salicylate, malic acid, tartaric acid and methyl tartarate), keto alcohols (for example, 4-hydroxy-4-methyl-2-pentanone, 4-hydroxy-2-pentanone, 4-hydroxy-4-methyl-2-pentanone and 4-hydroxy-2-heptanone), amino alcohols (for example, monoethanolamine, N,N-dimethylethanolamine, N-methyl-monoethanolamine, diethanolamine and triethanolamine), enolic active hydrogen compounds (for example, methylolmelamine, methylolurea, methylolacrylamide and diethyl malonate) and compounds having a substituent on the methyl group, methylene group or carbonyl carbon of acetylacetone (2,4-pentanedione).

The ligand is preferably an acetylacetone derivative. In the invention, the acetylacetone derivative refers to a compound having a substituent on the methyl group, methylene group or carbonyl carbon of acetylacetone. Examples of the substituent which is substituted on the methyl group of acetylacetone include a linear or branched alkyl group, a linear or branched acyl group, a linear or branched hydroxyalkyl group, a linear or branched carboxyalkyl group, a linear or branched alkoxy group and a linear or branched alkoxyalkyl group each having from 1 to 3 carbon atoms; examples of the substituent which is substituted on the methylene group of acetylacetone include a linear or branched carboxyalkyl group and a linear or branched hydroxyalkyl group each having from 1 to 3 carbon atoms as well as a carboxyl group; and examples of the substituent which is substituted on the carbonyl carbon of acetylacetone include an alkyl group having from 1 to 3 carbon atoms, and in this case, a hydrogen atom is added to the carbonyl oxygen to form a hydroxyl group.

Preferred specific examples of the acetylacetone derivative include acetylacetone, ethylcarbonylacetone, n-propylcarbonylacetone, i-propylcarbonylacetone, diacetylacetone, 1-acetyl-1-propionyl-acetylacetone, hydroxyethylcarbonylacetone, hydroxypropylcarbonylacetone, acetoacetic acid, acetopropionic acid, diacetoacetic acid, 3,3-diacetopropionic acid, 4,4-diacetobutyric acid, carboxyethylcarbonylacetone, carboxypropylcarbonylacetone and diacetone alcohol. Of these, acetylacetone and diacetylacetone are especially preferable. The complex of the foregoing acetylacetone derivative with the foregoing metal element is a mononuclear complex in which from 1 to 4 acetylacetone derivative molecules are coordinated per metal element. When the coordination number of the metal element is greater than the total coordination number of the acetylacetone derivative, ligands commonly used in usual complexes such as a water molecule, a halogen ion, a nitro group and an ammonio group may be coordinated on the metal element.

Preferred examples of the metal complexe include a tris(acetylacetonato)aluminum complex salt, a di-(acetylacetonato)aluminum aquocomplex, a mono-(acetylacetonato)aluminum chlorocomplex salt, a di-(diacetylacetonato) aluminum complex salt, ethylacetoacetate aluminum diisopropylate, aluminum tris(ethylacetoacetate), cyclic aluminum oxide isopropylate, a tris(acetylacetonato)barium complex salt, a di(acetylacetonato)titanium complex salt, a tris(acetylacetonato)titanium complex salt, a di-i-propoxy bis(acetylacetonato)titanium complex salt, zirconium tris(ethylacetoacetate) and a zirconium tris(benzoic acid) complex salt. These metal complexes exhibit excellent stability in an aqueous coating solution and are excellent in an effect for accelerating the gelation in a sol-gel reaction at the heat drying. Above all, ethylacetoacetate aluminum diisopropylate, aluminum tris(ethylacetoacetate), a di(acetylacetonato)titanium complex salt and zirconium tris(ethylacetoacetate) are especially preferable.

In this specification, the description of a counter salt of the foregoing metal complex is omitted. The kind of the counter salt is arbitrary so far as it is a water-soluble salt which keeps the electric charge as a complex compound neutral. Salts which can be stoichiometrically kept neutral, for example, nitrates, halogenic acid salts, sulfates and phosphates, are useful. The behavior of a silica sol-gel reaction of the metal complex is described in detail in J. Sol-Gel. Sci. and Tec., 16, 209 (1999). As its reaction mechanism, the following scheme may be presumed. That is, it is thought that the metal complex takes a coordination structure and is stable in a coating solution and in a dehydration condensation reaction starting with a heating and drying step after coating, accelerates crosslinking according to a mechanism similar to an acid catalyst. In any event, the use of this metal complex made it possible to improve the stability with time of the coating solution and the surface quality of the film and to attain high hydrophilicity and high durability.

The catalyst (C) according to the invention is preferably used in an amount in the range of from 0 to 50 % by mass, and more preferably from 5 to 25 % by mass in terms of a non-volatile component in the hydrophilic composition of the invention. The catalyst (C) may be used singly or in combination of two or more kinds thereof.

The hydrophilic composition to be used in the invention contains the components (A) and (B) and preferably further contains the catalyst (C). Furthermore, various compounds can be used jointly depending upon the purpose so far as the effects of the invention are not hindered. The components which can be used jointly ((D) additives) are hereunder described.

### [(D) Additives]

### [Surfactant]

In the invention, in order to enhance film surface properties of the foregoing hydrophilic composition, it is preferable to use a surfactant. Examples of the surfactant include nonionic surfactants, anionic surfactants, cationic surfactants, ampholytic surfactants and fluorocarbon based surfactants.

The nonionic surfactant which is used in the invention is not particularly limited, and conventionally known nonionic surfactants can be used. Examples thereof include polyoxyethylene alkyl ethers, polyoxyethylene alkylphenyl ethers, polyoxyethylene polystyrylphenyl ethers, polyoxyethylene polyoxypropylene alkyl ethers, glycerin fatty acid partial esters, sorbitan fatty acid partial esters, pentaerythritol fatty acid partial esters, propylene glycol mono-fatty acid esters, sucrose fatty acid partial esters, polyoxyethylene sorbitan fatty acid partial esters, polyoxyethylene sorbitol fatty acid partial esters, polyethylene glycol fatty acid esters, polyglycerin fatty acid partial esters, polyoxyethylenated castor oils, polyoxyethylene glycerin fatty acid partial esters, fatty acid diethanolamides, N,N-bis-2-hydroxyalkylamines, polyoxyethylene alkylamines, triethanolamine fatty acid esters, trialkylamine oxides, polyethylene glycol and a copolymer of polyethylene glycol and polypropylene glycol.

The anionic surfactant which is used in the invention is not particularly limited, and conventionally known anionic surfactants can be used. Examples thereof include fatty acid salts, abietic acid salts, hydroxyalkanesulfonic acid salts, alkanesulfonic acid salts, dialkylsulfosuccinic acid esters, linear alkylbenzenesulfonic acid salts, branched alkylbenzenesulfonic acid salts, alkylnaphthalenesulfonic acid salts, alkylphenoxypolyoxyethylene propylsulfonic acid salts, polyoxyethylene alkylsulfophenyl ether salts, N-methyl-N-oleyltaurin sodium salts, N-alkylsulfosuccinic acid monoamide disodium salts, petroleum sulfonic acid salts, sulfated beef tallow oil, sulfuric ester salts of a fatty acid alkyl ester, alkylsulfuric ester salts, polyoxyethylene alkyl ether sulfuric ester salts, fatty acid monoglyceride sulfuric ester salts, polyoxyethylene alkylphenyl ether sulfuric ester salts, polyoxyethylene styrylphenyl ether sulfuric ester salts, alkylphosphoric ester salts, polyoxyethylene alkyl ether phosphoric ester salts, polyoxyethylene alkylphenyl ether phosphoric ester salts, a partially saponified product of a styrene/maleic anhydride copolymer, a partially saponified product of an olefin/maleic anhydride copolymer and naphthalenesulfonic acid salt formalin condensates.

The cationic surfactant which is used in the invention is not particularly limited, and conventionally known cationic surfactants can be used. Examples thereof include alkylamine salts, quaternary ammonium salts, polyoxyethylene alkylamine salts and polyethylene polyamine derivatives.

The ampholytic surfactant which is used in the invention is not particularly limited, and conventionally known ampholytic surfactants can be used. Examples thereof include carboxybetaines, aminocarboxylic acids, sulfobetaines, aminosulfuric esters and imidazolines.

In the foregoing surfactants, the "polyoxyethylene" can also be given a different reading as "polyoxyalkylene", for example, polyoxymethylene, polyoxypropylene and polyoxybutylene. In the invention, those surfactants can also be used.

Furthermore, examples of the preferred surfactant include fluorocarbon based surfactants containing a perfluoroalkyl group in a molecule thereof. Examples of such a fluorocarbon based surfactant include anionic types (for example, perfluoroalkylcarboxylic acid salts, perfluoroalkylsulfonic acid salts and perfluoroalkylphosphoric esters); ampholytic types (for example, perfluoroalkylbetaines); cationic types (for example, perfluoroalkyltrimethylammonium salts); and nonionic types (for example, perfluoroalkylamine oxides, perfluoroalkyl ethylene oxide adducts, oligomers containing a perfluoroalkyl group and a hydrophilic group, oligomers containing a perfluoroalkyl group and a lipophilic group, oligomers containing a perfluoroalkyl group, a hydrophilic group and a lipophilic group and urethanes containing a perfluoroalkyl group and a lipophilic group). Also, fluorocarbon based surfactants described in JP-A-62-170950, JP-A-62-226143 and JP-A-60-168144 can be favorably exemplified.

The surfactant is preferably used in an amount in the range of from 0.001 to 10 % by mass, and more preferably from 0.01 to 5 % by mass in terms of a non-volatile component in the hydrophilic composition of the invention. Also, the surfactant can be used singly or in combination of two or more kinds thereof.

### [Inorganic fine particle]

The hydrophilic composition of the invention may contain an inorganic fine particle for the purposes of enhancing the cured film strength and hydrophilicity of the hydrophilic film to be formed. Examples of the inorganic fine particle which is favorably used include silica, alumina, magnesium oxide, titanium oxide, magnesium carbonate, calcium alginate and mixtures thereof.

The inorganic fine particle preferably has an average particle size of from 5 nm to 10 µm, and more preferably from 0.5 to 3 µm. When the particle size of the inorganic fine particle falls within the foregoing range, it is possible to form a film with excellent hydrophilicity in which the inorganic fine particle is stably dispersed in the hydrophilic layer and the film strength of the hydrophilic layer is sufficiently kept. The foregoing inorganic fine particle is easily available as a commercial product such as a colloidal silica dispersion.

The inorganic fine particle according to the invention is preferably used in an amount in the range of not more than 20 % by mass, and more preferably not more than 10 % by mass in terms of a non-volatile component in the hydrophilic composition of the invention. Also, the inorganic fine particle can be used singly or in combination of two or more kinds thereof.

### [Antioxidant]

For the purpose of enhancing the stability of the hydrophilic member of the invention, an antioxidant can be added in the coating solution for forming a hydrophilic layer. Examples of the antioxidant include those described in EP-A-223739, EP-A-309401, EP-A-309402, EP-A-310551, EP-A-310552, EP-A-459416, DE-A-3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449 and U. S. Patents Nos. 4,814,262 and 4, 980, 275.

The addition amount of the antioxidant is properly chosen depending upon the purpose and is preferably from 0.1 to 8 % by mass in terms of a non-volatile component in the hydrophilic composition.

### [High-molecular weight compound]

For the purpose of adjusting film physical properties of the hydrophilic layer, various high-molecular weight compounds can be added in the coating solution for forming a hydrophilic layer of the hydrophilic member of the invention within the range where the hydrophilicity is not hindered. Examples of the high-molecular weight compound which can be used include acrylic polymers, polyvinyl alcohol resins, polyvinyl butyral resins, polyurethane resins, polyamide resins, polyester resins, epoxy resins, phenol resins, polycarbonate resins, polyvinyl formal resins, shellac, vinyl based resins, acrylic resins, rubber based resins, waxes and other natural resins. Such a high-molecular weight compound may be used in combination with two or more kinds thereof. Of these, vinyl based copolymers obtainable by copolymerization with an acrylic monomer are preferable. In addition, with respect to the copolymerization composition of a high-molecular weight binder, copolymers containing, as a structural unit, a "carboxyl group-containing monomer", an "alkyl methacrylate" or an "alkyl acrylate" are also preferably used.

In addition to the foregoing, for example, a leveling additive, a matting agent, a wax for adjusting film physical properties and a tackifier for improving adhesion to the substrate within the range where the hydrophilicity is not hindered can be contained as the need arises.

Specific examples of the tackifier include high-molecular weight adhesive polymers described on pages 5 to 6 of JP-A-2001-49200 (for example, copolymers made of an ester of (meth)acrylic acid and an alcohol having an alkyl group having from 1 to 20 carbon atoms, an ester of (meth)acrylic acid and an alicyclic alcohol having from 3 to 14 carbon atoms and an ester of (meth)acrylic acid and an aromatic alcohol having from 6 to 14 carbon atoms); and low-molecular weight tackiness-imparting resins having a polymerizable unsaturated bond.

### (Antimicrobial agent)

In order to impart antimicrobial properties, anti-fungal properties and anti-algal properties to the hydrophilic member of the invention, an antimicrobial agent can be contained in the hydrophilic coating solution composition. In the formation of a hydrophilic layer, it is preferable to contain a hydrophilic, water-soluble antimicrobial agent. By containing the hydrophilic, water-soluble antimicrobial agent, a surface-hydrophilic member which is excellent in antimicrobial properties, anti-fungal properties and anti-algal properties is obtainable without impairing the surface hydrophilicity.

It is preferable that a compound which does not reduce the hydrophilicity of the hydrophilic member is added as the antimicrobial agent. Examples of such an antimicrobial agent include inorganic antimicrobial agents and water-soluble organic antimicrobial agents. As the antimicrobial agent, ones exhibiting an antimicrobial effect against fungi existing in the surroundings, for example, bacteria represented by *Staphylococcus aureus* and *Escherichia coli* and *Eumycetes* such as fungi and yeasts are useful.

Examples of the organic antimicrobial agent include phenol ether derivatives, imidazole derivatives, sulfone derivatives, N-haloalkylthio compounds, anilide derivatives, pyrrole derivatives, quaternary ammonium salts, pyridine based compounds, triazine based compounds, benzisothiazoline based compounds and isothiazoline based compounds.

Specific examples thereof 1,2-benzisothiazolin-3-one, N-fluorodichloromethylthiophthalimide, 2,3,5,6-tetrachloroisophthalonitrile, N-trichloromethylthio-4-cyclohexene-1,2-dicarboxyimide, copper 8-quinolinate, bis-(tributyltin) oxide, 2-(4-thiazolyl)benzimidazole (hereinafter referred to as "TBZ"), methyl 2-benzimidazole carbamate (hereinafter referred to as "BCM"), 10,10'-oxybisphenoxy arsine (hereinafter referred to as "OBPA"), 2,3,5,6-tetrachloro-4-(methylsulfone)pyridine, bis(2-pyridylthio-1-oxide)zinc (hereinafter referred to as "ZPT"), N,N-dimethyl-N'-(fluorodichloromethylthio)-N'-phenylsulfamide (dichlorfluanid), poly(hexamethylenebiguanid) hydrochloride, dithiol-2,2'-bis(benzmethylamide), 2-methyl-4,5-trimethylene-4-isothiazolin-3-one, 2-bormo-2-nitro-1,3-propanediol, hexahydro-1,3-tris(2-hydroxyethyl)-s-triazine, p-chloro-m-xylenol and 1,2-benzisothiazolin-3-one. However, it should not be construed that the invention is limited thereto.

Such an organic antimicrobial agent can be properly chosen and used while taking into consideration hydrophilicity, water resistance, sublimation properties, safety, etc. Of the organic antimicrobial agents, 2-bromo-2-nitro-1,3-propanediol, TBZ, BCM, OBPA and ZPT are preferable in view of hydrophilicity, ant-bacterial effect and cost.

As the inorganic antimicrobial agent, mercury, silver, copper, zinc, iron, lead and bismuth can be exemplified in the order of a high sterilization effect. Examples thereof include antimicrobial agents obtained by supporting a metal (for example, silver, copper, zinc and nickel) or a metal ion thereof on a silicate based carrier, a phosphate based carrier, an oxide, glass, potassium titanate, an amino acid, etc. Specific examples thereof zeolite based antimicrobial agents, calcium silicate based antimicrobial agents, zirconium phosphate based antimicrobial agents, calcium phosphate based antimicrobial agents, zinc oxide based antimicrobial agents, soluble glass based antimicrobial agents, silica gel based antimicrobial agents, active carbon based antimicrobial agents, titanium oxide based antimicrobial agents, titania based antimicrobial agents, organometal based antimicrobial agents, ion exchanger ceramic based antimicrobial agents, stratiform phosphate-quaternary ammonium based antimicrobial agents and antimicrobial stainless steel. However, it should not be construed that the invention is limited thereto.

Examples of naturally occurring antimicrobial agents include chitosan which is a basic polysaccharide obtained by hydrolysis of chitin contained in crustaceans such as crabs and shrimps.

A trade name "HOLON KILLER BEADS CELLER" of Nikko Co., which is composed of an amino metal having a metal compounded on both sides of an amino acid, is preferable in the invention.

Such an antimicrobial agent is nonvolatile; is easy to mutually act on the polymer or the crosslinking agent component of the hydrophilic layer; and is stably molecularly dispersible or solid dispersible. Also, such an antimicrobial agent is easily exposed effectively on the surface of the hydrophilic layer and when wetted with water, does not elute and is able to hold its effect over a long period of time. Furthermore, it does not affect the human body. The antimicrobial agent can be stably dispersed in the hydrophilic layer or the coating solution and does not cause deterioration the hydrophilic layer or the coating solution.

Of the foregoing antimicrobial agents, silver based inorganic antimicrobial agents and water-soluble organic antimicrobial agents are the most preferable in view of the matter that the antimicrobial effect is large. A silver zeolite having silver supported on a zeolite as a silicate based carrier, an antimicrobial agent having silver supported on a silica gel, 2-bromo-2-nitro-1,3-propanediol, TPN, TBZ, BCM, OBPA and ZPT are especially preferable. Especially preferred examples of a commercially available silver zeolite based antimicrobial agent include ZEOPMIC (available from Shinagawa Fuel Co., Ltd.), SILWELL (available from Fuji Silysia Chemical Ltd.) and BACTENON (available from Japan Electronic Materials Corporation). Besides, NOVARON (available from Toagosei Co., Ltd.) having silver supported on an inorganic ion exchanger ceramic, ATOMY BALL (available from Catalysts & Chemicals Ind. Co., Ltd.) and SAN-AI BAC P (available from San-Ai Oil Co., Ltd.) which is a triazine based antimicrobial agent are also preferable.

The content of the antibacterial agent is preferably from 0.001 to 10 % by mass, more preferably from 0.005 to 5 % by mass, still more preferably from 0.01 to 3 % by mass, especially preferably from 0.02 to 1.5 % by mass, and most preferably from 0.05 to 1 % by mass relative to the whole solids content of the hydrophilic layer. When the content of the antibacterial agent is 0.001 % by mass, an effective antimicrobial agent can be obtained. Also, when the content of the antibacterial agent is not more than 10 % by mass or more, the hydrophilicity is not reduced; the properties with time do not become worse; and the antifouling properties and anti-fogging properties are not adversely affected.

### [Preparation of hydrophilic composition]

The preparation method of the hydrophilic composition to be used in the invention is hereunder described.

The preparation of the hydrophilic composition can be carried out by dissolving preferably the hydrophilic polymer (A), the metal alkoxide compound (B) and the catalyst (C) and further preferably the additive (D) in a solvent and stirring the solution. The catalyst (C) is preferably mixed immediately before coating on the substrate. Concretely, it is preferable that the hydrophilic composition is coated immediately after mixing the catalyst (C) or within a time of up to one hour after mixing the catalyst (C).

When the hydrophilic composition is coated after mixing the catalyst (C) and allowing it to stand for a long period of time, the viscosity of the hydrophilic composition increases, whereby a defect such as coating unevenness may possibly be generated.

It is also preferable that other components are mixed immediately before coating the hydrophilic composition. In that case, however, the hydrophilic composition may be stored for a long period of time after mixing these other components.

In the preparation, the reaction temperature is preferably from room temperature to 80 °C; the reaction time, namely a time for continuing stirring, is preferably in the range of from 1 to 72 hours; and by advancing the hydrolysis and polycondensation of the components (A) and (B) by this stirring, an organic/inorganic composite sol liquid can be obtained.

The solvent which is used in preparing the foregoing hydrophilic composition is not particularly limited so far as it is able to uniformly dissolve and disperse these components therein. The solvent is preferably an aqueous solvent, for example, methanol, ethanol and water.

As described previously, the preparation of the organic/inorganic composite sol liquid (hydrophilic composition) for forming a hydrophilic film from the hydrophilic composition of the invention utilizes a so-gel method. The sol-gel method is described in detail in Sumio SAKUHANA, Sol-Gel-Ho No Kagaku (Science of Sol-Gel Process), published by Agune Shofu Sha (1988); and Ken HIRASHIMA, Saishin Sol-Gel-Ho Niyoru Kinosei Hakumaku Sakusei Gijutsu (Functional Thin Film Formation Technology according to Newest Sol-Gel Method), published by General Technology Center (1992). In the invention, the methods as described in these documents can be applied to the preparation of the hydrophilic composition.

The hydrophilic member of the invention can be obtained by coating a solution containing such a hydrophilic composition of the invention on an adequate substrate and drying the hydrophilic composition. That is, the hydrophilic member of the invention has a hydrophilic film formed by coating the foregoing hydrophilic composition of the invention on a substrate and heating and drying the hydrophilic composition.

In the formation of the hydrophilic film, with respect to the heating and drying condition after coating a solution containing the hydrophilic composition, from the viewpoint of efficiently forming a high-density crosslinking structure, drying is preferably performed at a temperature in the range of from 50 to 200 °C for from about 2 minutes to one hour, and more preferably at a temperature in the range of from 80 to 160 °C for from 5 to 30 minutes. Also, as a heating measure, a known measure, for example, use of a dryer having a temperature-adjusting function is preferably employed.

The hydrophilic member of the invention can be prepared by a known coating method without particular limitations. Examples of the coating method which can be applied include a spray coating method, a dip coating method, a flow coating method, a spin coating method, a roll coating method, a film applicator method, a screen printing method, a bar coater method, painting with a brush and painting with a sponge.

The thickness of the hydrophilic layer of the invention is preferably from 0.01 µm to 100 µm, more preferably from 0.05 µm to 50 µm, and most preferably from 0.1 µm to 20 µm. In the case where the film thickness is 0.01 µm or more, sufficient hydrophilicity and durability are obtainable, and therefore, such is preferable; whereas in the case where the film thickness is not more than 100 µm, a problem such as the generation of a crack is not caused in fabrication properties, and therefore, such is preferable.

### [Surface free energy]

The degree of hydrophilicity of the hydrophilic layer surface is in general measured in terms of a droplet contact angle. However, with respect to a surface with very high hydrophilicity as in the invention, there is a possibility that the droplet contact angle is not more than 10 degrees, and even not more than 5 degrees. Thus, in mutually comparing the degree of hydrophilicity, there is a limit. On the other hand, examples of a method for evaluating the degree of hydrophilicity on a solid surface in detail include a measurement of surface free energy. There are proposed various methods. In the invention, however, the surface free energy was measured by employing the Zisman plot method as one example. Concretely, the Zisman plot method is a measurement method in which by utilizing the properties that in an aqueous solution of an inorganic electrolyte, for example, magnesium chloride, its surface tension becomes large with an increase of the concentration thereof, a contact angle is measured in air under a room temperature condition by using the aqueous solution; a surface tension of the aqueous solution is taken on the abscissa, whereas a value obtained by reducing the contact angle into cos θ is taken on the ordinate; points of the aqueous solution of various concentrations are plotted to obtain a linear relationship; and the surface tension at cos θ = 1, namely at a contact angle = 0° is defined as surface free energy of the solid. The surface tension of water is 72 mN/m, and it may be said that the larger the value of surface free energy, the higher the hydrophilicity is.

The hydrophilic layer in which the surface free energy as measured in such a method is in the range of from 70 mN/m to 95 mN/m, preferably from 72 mN/m to 93 mN/m, and more preferably from 75 mN/m to 90 mN/m is excellent in hydrophilicity and exhibits a satisfactory performance.

### [Substrate]

For example, in the case where an anti-fogging effect is expected, a material to which the hydrophilic member of the invention can be applied is a transparent material. Examples thereof include a transparent glass substrate, a transparent plastic substrate, a lens, a prism and a mirror.

In particular, in the invention, a substrate whose surface is hydrophobic is favorably used. In order to form a chemical bond between the substrate and the first layer, the hydrophobic substrate preferably has a crosslinking group and can be subjected to a surface hydrophilization treatment such as an oxidation method. Examples of the foregoing oxidation method include a corona discharge treatment, a glow discharge treatment, a chromic acid treatment (wet type), a flame treatment, a hot blast treatment and an ozone or ultraviolet ray irradiation treatment. By applying such a treatment, a hydroxyl group, a carboxyl group, an amino group or the like can be formed.

As the glass, any of glasses, for example, soda glass, flint glass and boro-silicate glass may be used. Also, float sheet glass, figured sheet glass, ground sheet glass, wire glass, crosswire glass, tempered glass, laminated glass, multilayered glass, vacuum glass, security glass and high-heat insulating Low-E multilayered glass can be used depending upon the purpose.

Examples of applications to which the member having an anti-fogging effect can be applied include mirrors (for example, a vehicle rearview mirror, a bathroom mirror, a washroom mirror, a dental mirror and a road mirror); lenses (for example, a spectacle lens, an optical lens, a camera lens, an endoscope lens, a lighting lens, a semiconductor lens and a copier lens); prisms; window glasses of a building or a watchtower; other building material lenses; window glasses of various vehicles, for example, an automobile, a railway vehicle, an aircraft, a boat, a submersible, a snow vehicle, a gondola of ropeway and a gondola of amusement park; windshields of various vehicles, for example, an automobile, a railway vehicle, an aircraft, a boat, a submersible, a snow vehicle, a snowmobile, a motorcycle, a gondola of ropeway and a gondola of amusement park; protective goggles, sporting goggles, shields for protective mask, shields for sporting mask, shields of helmet and glasses of display case of frozen foods; cover glasses of measuring instrument; and films to be stuck on the surfaces of the foregoing articles. The most preferable application is an automobile or building glass.

Also, when the surface hydrophilic member of the invention is expected to have an antifouling effect, for example, in addition to glasses and plastics, any of metals, ceramics, woods, stones, cements, concretes, fibers, textiles, papers, combinations thereof and stacks thereof can be favorably utilized as the base material.

Examples of applications to which the member having an antifouling effect can be applied include building materials, building exteriors such as outer walls and roofs, building interiors, window frames, window glasses, structural members, exteriors and paints of vehicles, for example, automobiles, railway vehicles, aircrafts, boats, bicycles and motorcycles, exteriors of machine apparatus and articles, dustproof covers and paints, traffic signs, various display devices, advertising columns, road noise-blocking walls, railway noise-blocking walls, bridges, exteriors and paints of guardrail, tunnel interiors and paints, insulators, solar battery covers, heat collecting covers of solar water heater, vinyl green houses, covers of vehicular lamp, residential facilities, toilet bowls, bathtubs, washing sinks, luminaires, luminaire covers, kitchen utensils, dishes, dish washers, dish driers, kitchen sinks, cooking microwave ovens, kitchen hoods, ventilation fans and films to be stuck onto surfaces of the foregoing articles.

The applications also include signboards, traffic signs, noise-proof walls, vinyl green houses, insulators, vehicle covers, tent materials, reflectors, shutters, screens, solar battery covers, heat collecting covers of solar water heater, etc., outdoor lamps, pavements, outdoor lightings, stones or tiles for artificial fall or artificial fountain, bridges, greenhouses, outer wall materials, wall-to-wall or glass-to-glass sealers, guardrails, verandas, vending machines, outdoor units of air conditioner, outdoor benches, various display apparatus, shutters, tollhouses, charge boxes, roof gutters, protective covers for vehicle lamp, dustproof covers and paints, paints of machine apparatus and articles, exteriors and paints of advertising column, structural members, residential facilities, toilet bowls, bathtubs, washing sinks, luminaires, kitchen utensils, dishes, dish driers, kitchen sinks, cooking microwave ovens, kitchen hoods, ventilation fans, window rails, window frames, tunnel interiors, tunnel lightings, window sashes, heat radiation fans for heat exchanger, pavements, mirrors for bathroom or washroom, vinyl green house ceilings, washstands, automobile bodies, films to be stuck onto the foregoing articles and stickers.

The surface hydrophilic member of the invention is also applicable to roof materials for snowy district, antennas, power transmission lines and the like. On that occasion, an excellent characteristic in snow accretion-preventing properties is obtained.

### EXAMPLES

The invention is hereunder described in detail with reference to the following Examples, but it should not be construed that the invention is limited thereto.

### [Example 1]

A polyethylene terephthalate (PET) substrate (thickness: 50 µm), a surface of which had been hydrophilized by a glow treatment, was prepared; and a first layer coating solution (1) having the following composition was spin coated thereon (at 1,000 rpm for 30 seconds) and dried in an oven at 100 °C for 2 minutes to form a first layer at a dry coverage of 0.5 g/m². The first layer had a water droplet contact angle of 80 degrees. Subsequently, a hydrophilic layer coating solution (1) was spin coated on the first layer (at 100 rpm for 2 minutes, at 50 rpm for 5 minutes and then at 200 rpm for 2 minutes) and dried in an oven at 100 °C for 10 minutes to form a hydrophilic layer at a dry coverage of 2.0 g/m², thereby preparing a hydrophilic member. The coating surface properties were satisfactory. This hydrophilic member had a water droplet contact angle of not more than 5 degrees and surface free energy of 87 mN/m and had a surface with very high hydrophilicity. The hydrophilic layer had a visible light transmittance of 95 % (as measured by a spectrophotometer, U3000 (manufactured by Hitachi, Ltd.)).

The member was obliquely cut to prepare a cross-section sample and subjected to TOF-SIMS analysis. As a result, a urethane linkage was confirmed from an interface between the PET substrate and the first layer and an interface between the first layer and the hydrophilic layer.

Also, a hydrophilic member was prepared in the same manner, except for changing the substrate to a silicon wafer and measured by transmission FT-IR. As a result, an absorption peak at 2,000 to 2,300 cm⁻¹ as derived from the isocyanate of the raw material disappeared; an absorption in the vicinity of 1, 650 cm⁻¹ as derived from the urethane linkage was observed; and a later-to-layer chemical bond was confirmed.

### <First layer coating solution (1)>

- EPIKOTE 1009 (manufactured by Shell Chemicals 100 g Japan Ltd.):

- TAKENATE D110N (manufactured by Takeda 100 g Pharmaceutical Company Limited, solids content: 10 %):

- Methyl ethyl ketone: 1,200 g

### <Hydrophilic layer coating solution (1)>

- 20 % by mass aqueous solution of colloidal silica 100 g dispersion (SNOWTEX C):

- Sol-gel preparation as described below: 500 g
- 5 % by mass aqueous solution of anionic surfactant 30 g as described below:

- Purified water: 450 g

### Anionic surfactant

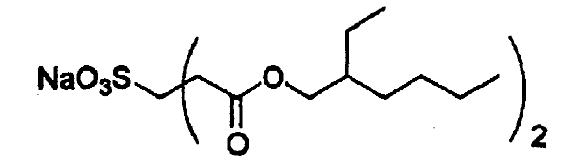

### <Sol-gel preparation>

8 g of tetramethoxysilane (manufactured by Tokyo Chemical Industry Co., Ltd.) and 5 g of a silane coupling group-terminated hydrophilic polymer as described below were mixed in 200 g of ethyl alcohol, 10 g of acetylacetone, 10 g of tetraethyl orthotitanate and 100 g of purified water, and the mixture was stirred at room temperature for 2 hours to prepare a sol-gel preparation.

### <Synthesis of silane coupling group-terminated hydrophilic polymer>

A three-necked flask was charged with 25 g of acrylamide, 3.5 g of 3-mercaptopropyl trimethoxysilane and 51.3 g of dimethylformamide; the mixture was heated to 65 °C under a nitrogen gas stream; and 0.25 g of 2,2'-azobis(2,4-dimethylvaleronitrile) was added to start a reaction. After stirring for 6 hours, the reaction mixture was returned to room temperature and thrown in 1.5 L of ethyl acetate. As a result, a solid was deposited. Thereafter, the solid was collected by filtration, thoroughly washed with ethyl acetate and dried (yield: 21 g). It was confirmed from GPC (standard: polystyrene) that this product was a polymer having a mass average molecular weight of 4, 000. A viscosity of a 5 % aqueous solution of this polymer was 2.5 cPs, and a functional group density of the hydrophilic group was 13.4 meq/g.

### (Evaluation)

The foregoing hydrophilic member was evaluated in the following manners.

### Hydrophilicity

A water droplet contact angle in air was measured by using DropMaster 500, manufactured by Kyowa Interface Science Co., Ltd.

### Water resistance

The hydrophilic member having a size of 120 cm² was subjected to a rubbing treatment with sponge in 10 reciprocations in water while applying a load of 1 kg, and a rate of residual film was measured from a change of weight before and after the rubbing treatment.

### Anti-abrasion properties

The hydrophilic member was rubbed by a non-woven cloth (BEMCOT, manufactured by Asahi Chemical Fiber Co., Ltd.) in 100 reciprocations while applying a load of 500 g, and a water droplet contact angle in air was measured. Even after rubbing, in the case where the water droplet contact angle (degrees) exhibits a low value, the durability is good.

### Scratch resistance

A sapphire stylus having a diameter of 0.1 mm was scanned on the surface of the hydrophilic layer by applying a load while increasing a load of every 5 g starting from 5 g, thereby evaluating a load at which the hydrophilic surface was injured (measured by a scratch strength tester, Type 18S, manufactured by Shinto Scientific Co., Ltd.). Even if the load is large, when the hydrophilic surface is not injured, the durability is good.

### Anti-fogging properties

The coated sample was covered on a plastic cup charged with warm water at 80 °C, and a state of fogging was visually judged according to the following criteria.
A: Fogging is not observed.
B: Fogging is partially observed.
C: The surface is entirely fogged.

### Antifouling properties

5 g of carbon black (FW-200, manufactured by Degussa AG) was suspended in 95 g of water to prepare a slurry; and the slurry was spray coated entirely uniformly on the surface of the hydrophilic member and then dried at 60 °C for one hour. The resulting sample was rinsed with gauze while allowing running water to flow. After drying, the adhesion state of carbon black was measured in terms of transmittance (%) by using a spectrophotometer, U3000 (manufactured by Hitachi, Ltd.).

### Visible light transmittance

A visible light transmittance at a wavelength of from 380 nm to 780 nm was measured by using a spectrophotometer (U3000, manufactured by Hitachi, Ltd.). The calculation of the transmittance followed the method in conformity with JIS R3106.

### Weather resistance

The hydrophilic member was exposed in a sunshine carbon arc-type accelerated weather resistance tester for 500 hours and evaluated with respect to hydrophilicity, water resistance, durability, anti-fogging properties, antifouling properties and visible light transmittance according to the foregoing methods. The evaluation was judged according to the following criteria.
A: Performance is equal to that before the exposure in all of the items.
B: One item is inferior to that before the exposure.
C: Two or more items are inferior to those before the exposure.

As a result, the obtained hydrophilic member had a water droplet contact angle of not more than 5 degrees and exhibited very high hydrophilicity; and it had a rate of residual film of 100 % with respect to the water resistance and exhibited extremely satisfactory performance, thereby revealing no problem. Furthermore, this hydrophilic member was free from a reduction of the hydrophilicity by an abrasion test; and in the scratch test, it was not scratched up to 40 g so that it was excellent in scratch resistance.

As to the anti-fogging properties, the generation of fogging was not observed at all; and as to the antifouling properties, the adhesion of carbon black was not observed at all. Also, the visible light transmittance was 87 %, a value of which was equal to that of a PET substrate alone. Furthermore, as to the weather resistance, a change before and after the weather resistance test was not observed in all of the evaluations, thereby revealing satisfactory results. The results are shown in Table 1.

### [Example 2]

A first layer coating solution (2) having the following composition was spin coated on the first layer as described in Example 1 (at 1, 000 rpm for 60 seconds) and dried in an oven at 100 °C for 10 minutes to form a layer at a dry coverage of 0.5 g/m², thereby forming a first layer of a two-layered structure. The layer formed from the first layer coating solution (2) had a water droplet contact angle of 10 degrees. Subsequently, a hydrophilic layer was prepared on this first layer of a two-layered structure in the same manner as in Example 1. The obtained hydrophilic member had the same performance as that in Example 1 with respect to hydrophilicity, water resistance, anti-abrasion properties, scratch resistance, anti-fogging properties, antifouling properties, visible light transmittance and weather resistance. The results are shown in Table 1.

The member was obliquely cut to prepare a cross-section sample and subjected to TOF-SIMS analysis. As a result, a urethane linkage was confirmed from an interface between the PET substrate and the first layer, and an ether linkage was confirmed from an interface between the first layer and the hydrophilic layer.

Also, a hydrophilic member was prepared in the same manner, except for changing the substrate to a silicon wafer and measured by transmission FT-IR. As a result, an absorption peak in the vicinity of 1, 730 cm⁻¹ as derived from the aldehyde of the raw material disappeared; an absorption in the vicinity of 1,110 cm⁻¹ as derived from the ether linkage was observed; and a later-to-layer chemical bond was confirmed.

### <First layer coating solution (2)>

- PVA 105 aqueous solution (manufactured by Kuraray 130 g Co., Ltd., solids content: 6 %):
- Glyoxal aqueous solution (manufactured by Tokyo 50 g Chemical Industry Co., Ltd., solids content: 40 %) :
- Ethylene glycol diglycidyl ether (manufactured 10 g by Tokyo Chemical Industry Co., Ltd.):
- Methanol silica (manufactured by Nissan Chemical 30 g Industries, Ltd., solids content: 30 %):
- 5 % by mass aqueous solution of anionic surfactant 20 g as described in Example 1:
- Water: 7,600 g

### [Examples 3 to 4]

Hydrophilic layers were prepared in the same manner as in Example 1, except for changing the polymer of the first layer to each of the following polymers. The obtained hydrophilic members had the same performance as that in Example 1 with respect to hydrophilicity, water resistance, anti-abrasion properties, scratch resistance, anti-fogging properties, antifouling properties, visible light transmittance and weather resistance. The results are shown in Table 1.

### Example 3

Methyl methacrylate/methacrylic acid (70/30 by mole) copolymer (weight average molecular weight: 35,000)

### Example 4

Aminoethylated acrylic polymer (a trade name: POLYMENT NK-380, manufactured by Nippon Shokubai Co., Ltd., weight average molecular weight: 100,000)

Each of the members was obliquely cut to prepare a cross-section sample and subjected to TOF-SIMS analysis. As a result, a urethane linkage, an amide linkage and a urea linkage were confirmed from an interface.

Also, hydrophilic members were prepared in the same manner, except for changing the substrate to a silicon wafer and measured by transmission FT-IR. As a result, in Example 3, an absorption peak in the vicinity of 1,710 cm⁻¹ as derived from the carboxyl group of the raw material was reduced, and an absorption peak in the vicinity of 1, 650 cm⁻¹ as described from the amide linkage was observed. In Example 4, an absorption peak in the vicinity of 3,300 cm⁻¹ as derived from the amino group of the raw material was reduced; an absorption peak in the vicinity of 1,630 cm⁻¹ as described from the urea linkage was observed; and a later-to-layer chemical bond was confirmed.

### [Example 5]

A hydrophilic member was prepared in the same manner as in Example 1, except for adding the following polymer in place of the silane coupling group-terminated hydrophilic polymer to be added in the sol-gel preparation as described in Example 1. The obtained hydrophilic member had the same performance as that in Example 1 with respect to hydrophilicity, water resistance, anti-abrasion properties, scratch resistance, anti-fogging properties, antifouling properties, visible light transmittance and weather resistance.

### Hydrophilic polymer

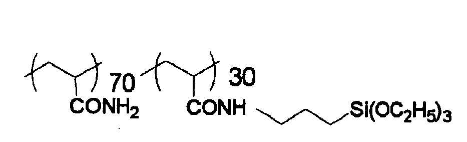

Similar to Example 1, a fragment as derived from the urethane linkage was observed, and a layer-to-layer chemical bond was confirmed.

### [Comparative Example 1]

The PET substrate as described in Example 1 was prepared without being subjected to a glow treatment, and a hydrophilic member was prepared in the same manner as in Example 1. Though the obtained hydrophilic member had the same performance as that in Example 1 with respect to hydrophilicity, anti-fogging properties, antifouling properties and visible light transmittance, it revealed inferior results with respect to water resistance, anti-abrasion properties, scratch resistance and weather resistance. The results are shown in Table 1.

The member was subjected to TOF-SIMS analysis in the same manner as in Example 1. As a result, a fragment as derived from the urethane linkage was not observed from an interface between the PET substrate and the first layer, and a later-to-layer chemical bond was not confirmed.

### [Comparative Example 2]

The PET substrate as described in Example 1 was prepared without being subjected to a glow treatment, and a hydrophilic member was prepared in the same manner as in Example 1, except for adding hydrophobic silica (TOSPEARL 130, manufactured by GE Toshiba Silicones Co. , Ltd., average particle size: 3.0 µm) in an amount of 20 % by weight of the total solids content in the first layer. Though the obtained hydrophilic member had the same performance as that in Example 1 with respect to hydrophilicity, anti-fogging properties, antifouling properties, water resistance, anti-abrasion properties, scratch resistance and weather resistance, it had a visible light transmittance of 43 % and revealed inferior results with respect to transparency. The results are shown in Table 1.

The member was subjected to TOF-SIMS analysis in the same manner as in Example 1. As a result, a fragment as derived from the urethane linkage was not observed from an interface between the PET substrate and the first layer, and a later-to-layer chemical bond was not confirmed.

### [Comparative Example 3] (Comparison by replication of JP-A-6-145453)

A hydrophilic member was prepared in the same manner as in Example 1, except for replacing the hydrophilic layer as described in Example 1 with the following coating solution to prepare a hydrophilic member. The obtained hydrophilic member had a water droplet contact angle of 45 degrees so that it was inferior to that of Example 1 in hydrophilic. Also, fogging was generated so that this hydrophilic member was poor in anti-fogging properties.

The member was subjected to TOF-SIMS analysis in the same manner as in Example 1. As a result, a fragment as derived from the urethane linkage was not observed from an interface between the PET substrate and the first layer, and a later-to-layer chemical bond was not confirmed.

### <Comparative hydrophilic layer coating solution>

- Polymer as described below: 100 g
- Tetramethoxysilane: 30 g
- Dioctyl phosphate 0.25 g
- Dodecylamine: 0.25 g
- Ethanol: 100 g
- Xylene: 50 g

### Polymer (copolymer having the following composition, weight average molecular weight: 25,000):

Methyl methacrylate/butyl methacrylate/butyl acrylate/γ-methacryloxypropyl trimethoxysilane/acrylamide = 28/47/12/12/1 (weight ratio)

**Table 1**

| | Hydrophilicity | Water resistance, rate of residual of (%) | Anti-abrasion properties | Scratch resistance | Anti-fogging properties | Antifouling properties | Visible light transmittance | Weather resistance |
|---|---|---|---|---|---|---|---|---|
| Example 1 | not more than 5 degrees | 100 | not more than 5 degrees | 50 g or more | A | 85 % | 87 % | A |
| Example 2 | not more than 5 degrees | 100 | not more than 5 degrees | 50 g or more 50 g or more | A | 83 % | 87% | A |
| Example 3 | not more than 5 degrees | 100 | not more than 5 degrees | 50 g or more | A | 86 % | 87 % | A |
| Example 4 | not more than 5 degrees | 100 | not more than 5 degrees | 50 g or more | A | 85 % | 87 % | A |
| Example 5 | not more than 5 degrees | 100 | not more than 5 degrees | 50 g or more | A | 82 % | 87 % | A |
| Comparative Example 1 | not more than 5 degrees | 80 | 30 degrees | 20 g | A | 85 % | 87 % | C |
| Comparative Example 2 | 45 degrees | 70 | 40 degrees | 10 g | A | 70 % | 43 % | C |
| Comparative Example 3 | not more than 5 degrees | 90 | 20 degrees | 20 g | C | 60 % | 87 % | C |

This application is based on Japanese Patent application JP 2007-084982, filed March 28, 2007, the entire content of which is hereby incorporated by reference, the same as if fully set forth herein.

Although the invention has been described above in relation to preferred embodiments and modifications thereof, it will be understood by those skilled in the art that other variations and modifications can be effected in these preferred embodiments without departing from the scope and spirit of the invention.

## Claims

1. A hydrophilic member comprising: a substrate; a first layer and a hydrophilic layer in this order,
wherein the first layer comprises a polymer and is joined with the substrate and the hydrophilic layer by a chemical bond; and the hydrophilic layer comprises a hydrophilic polymer and a metal element selected from Si, Ti, Zr and Al and has a crosslinking structure.

2. The hydrophilic member according to claim 1, wherein a side of the first layer on which the substrate is provided is hydrophobic, and a side of the first layer on which the hydrophilic layer is provided is hydrophilic.

3. The hydrophilic member according to claim 1 or 2, wherein the chemical bond is at least one of a urethane linkage, a urea linkage, an amide linkage, an ester linkage, an ether linkage, a carbon-carbon linkage, an N-C linkage, an S-C linkage and a siloxane linkage.

4. The hydrophilic member according to any one of claims 1 to 3, wherein the hydrophilic polymer comprises a compound having a structure represented by the following formula (I) or (II) : 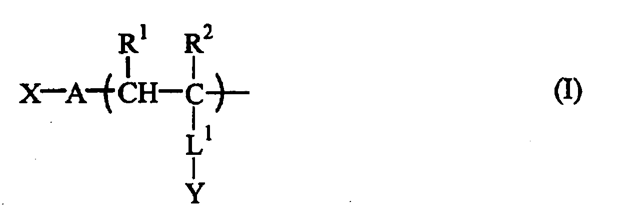 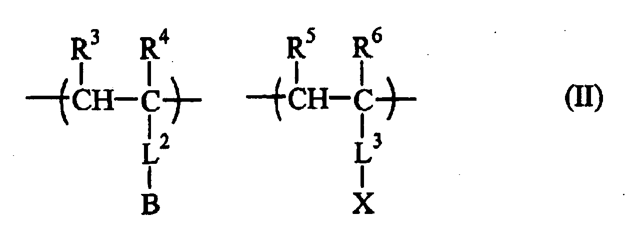 wherein R¹, R², R³, R⁴, R⁵ and R⁶ each independently represents a hydrogen atom or a hydrocarbon group having from 1 to 8 carbon atoms; X represents a reactive group; A, L¹, L² and L³ each independently represents a single bond or a connecting group; Y represents -NHCOR⁷, -CONH₂, -CON(R⁷)₂, -COR⁷, -OH, -CO₂M, -SO₃M, -PO₃M, -OPO₃M or -N(R⁷)₃Z¹; R⁷ represents an alkyl group, an aryl group or an aralkyl group each having from 1 to 18 carbon atoms; M represents a hydrogen atom, an alkali metal, an alkaline earth metal or an onium; Z¹ represents a halogen ion; and B represents the following formula (III): 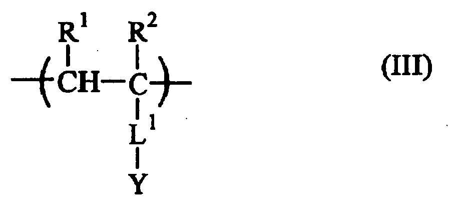 wherein R¹ and R² each independently represents a hydrogen atom or a hydrocarbon group having from 1 to 8 carbon atoms; L¹ represents a single bond or a connecting group; Y represents -NHCOR⁷, -CONH₂, -CON(R⁷)2, -COR⁷, -OH, -CO₂M, -SO₃M, -PO₃M, -OPO₃M or -N (R⁷)₃Z¹; R⁷ represents an alkyl group, an aryl group or an aralkyl group each having from 1 to 18 carbon atoms; M represents a hydrogen atom, an alkali metal, an alkaline earth metal or an onium; and Z¹ represents a halogen ion.

5. The hydrophilic member according to claim 4, wherein the reactive group represented by X is a carboxyl group or a salt thereof, a carboxylic acid anhydride group, an amino group, a hydroxyl group, an epoxy group, a methylol group, a mercapto group, an isocyanate group, a block isocyanate group, an alkoxysilyl group, an alkoxy titanate group, an alkoxy aluminate group, an alkoxy zirconate group, an ethylenically unsaturated double bond, an ester linkage or a tetrazole group.

6. The hydrophilic member according to any one of claims 1 to 3, wherein the hydrophilic polymer (A) comprises a compound having a structure represented by the following formula (IV-a) or (IV-b): 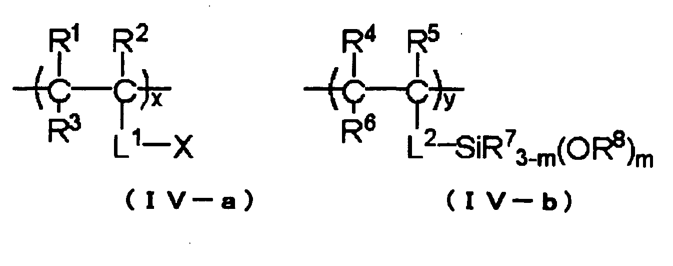 wherein R¹ to R⁸ each independently represents a hydrogen atom or a hydrocarbon group having not more than 8 carbon atoms; L¹ represents a single bond or a polyvalent organic connecting group; L² represents a single bond or a polyvalent organic connecting group having at least one structure selected from the group consisting of -CONH-, -NHCONH-, -OCONH-, -SO₂NH and -SO₃-; m represents an integer of from 1 to 3; x and y each represents a number of from 100 to 0 and is satisfied with the relationship of (x + y) = 100; X represents -OH, -ORₐ, -CORₐ, -CO₂Rₑ, -CON(Rₐ)(R_{b}), -N(Rₐ)(R_{b}), -NHCOR_{d}, -NHCO₂Rₐ, -OCON (Rₐ) (R_{b}), -NHCON(Rₐ) (R_{b}), -SO₃Rₑ, -OSO₃Rₑ, -SO₂R_{d}, -NHSO₂R_{d}, -SO₂N (Rₐ) (R_{b}), -N(Rₐ) (R_{b}) (R_{c}) -N (Rₐ) (R_{b}) (R_{c}) (R_{g}) -PO₃(Rₑ) (R_{f}), -OPO₃ (Rₑ) (R_{f}) or -PO₃(R_{d})(Rₑ), wherein Rₐ, R_{b} and R_{c} each independently represents a hydrogen atom or a linear, branched or cyclic alkyl group having from 1 to 8 carbon atoms; R_{d} represents a linear, branched or cyclic alkyl group having from 1 to 8 carbon atoms; Rₑ and R_{f} each independently represents a hydrogen atom, a linear, branched or cyclic alkyl group having from 1 to 8 carbon atoms, an alkali metal, an alkaline earth metal or an onium; and Rg represents a linear, branched or cyclic alkyl group having from 1 to 8 carbon atoms, a halogen atom, an inorganic anion or an organic anion.

7. A composition for forming a first layer of a hydrophilic member including a substrate, a first layer and a hydrophilic layer in this order, wherein the first layer comprises a polymer and is joined with the substrate and the hydrophilic layer by a chemical bond.
